(19)

Europäisches
Patentamt
European
Patent Office
Office européen
des brevets

(11) **EP 2 509 318 A1**

(12) **EUROPEAN PATENT APPLICATION**
published in accordance with Art. 153(4) EPC

(43) Date of publication:
**10.10.2012 Bulletin 2012/41**

(51) Int Cl.:
***H04N 7/32*** *(2006.01)*

(21) Application number: **10832801.4**

(22) Date of filing: **27.10.2010**

(86) International application number:
**PCT/JP2010/006344**

(87) International publication number:
**WO 2011/064945 (03.06.2011 Gazette 2011/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2009 JP 2009272179**

(71) Applicant: **NEC Corporation
Tokyo 108-8001 (JP)**

(72) Inventors:
• **CHONO, Keiichi
Tokyo 108-8001 (JP)**
• **SENDA, Yuzo
Tokyo 108-8001 (JP)**
• **TAJIME, Junji
Tokyo 108-8001 (JP)**
• **AOKI, Hirofumi
Tokyo 108-8001 (JP)**
• **SENZAKI, Kenta
Tokyo 108-8001 (JP)**

(74) Representative: **Vossius & Partner
Siebertstrasse 4
81675 München (DE)**

(54) **VIDEO ENCODING DEVICE AND VIDEO DECODING DEVICE**

(57) To efficiently reduce contour and stair-step artifacts.

A video encoding device includes a reconstruction means for adding an intra prediction signal or an interframe prediction signal to a reconstructed predictive error image block obtained by an inverse frequency transformation means to obtain a reconstructed image block, a noise inject means for injecting a pseudorandom noise into a reconstructed image picture, a Wiener filter means for applying a Wiener filter to the reconstructed image picture with a pseudorandom noise injected, and a reference image storage means for storing the reconstructed image picture to which the Wiener filter is applied as a reference image picture for inter-frame prediction.

FIG. 1

**Description**

Technical Field

The present invention relates to a video encoding device and a video decoding device to which a video encoding technique for reducing contour and stair-step artifacts is applied.

Background Art

Typically, a video encoding device digitalizes an externally input animation signal and then performs an encode processing conforming to a predetermined video encoding system thereon, thereby generating encoded data or a bit stream.

The predetermined video encoding system may be ISO/IEC 14496-10 Advanced Video Coding (AVC) described in Non-Patent Literature 1. The joint Model system is known as a reference model of an AVC encoding device (which will be called typical video encoding device).

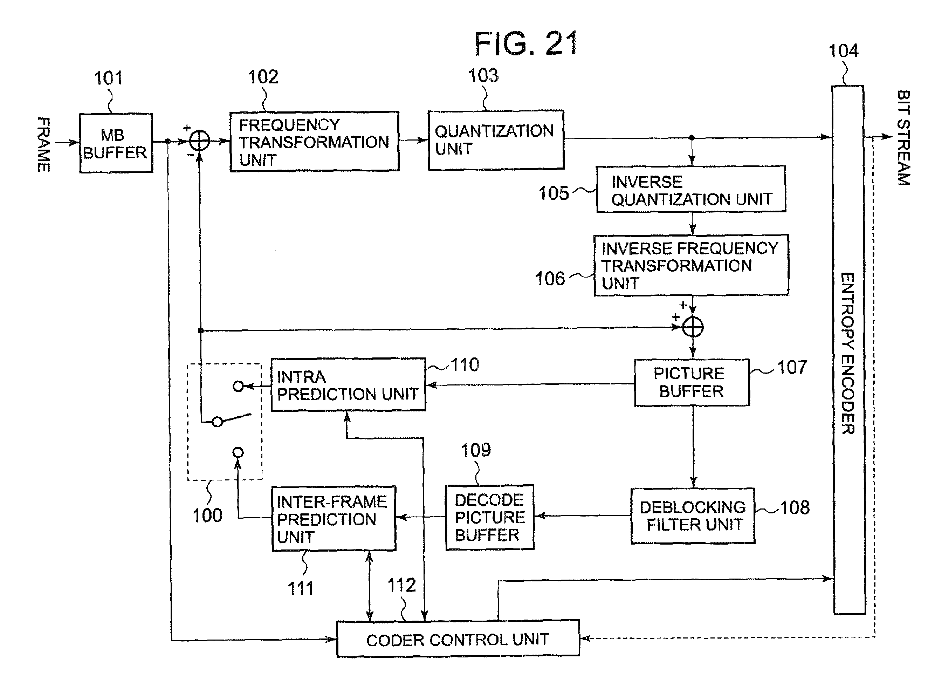

A structure and operations of the typical video encoding device for outputting a bit stream with each frame of a digitalized video as input will be described with reference to Fig. 21.

As shown in Fig. 21, the typical video encoding device includes a MB buffer 101, a frequency transformation unit 102, a quantization unit 103, an entropy encoder 104, an inverse quantization unit 105, an inverse frequency transformation unit 106, a picture buffer 107, a deblocking filter unit 108, a decode picture buffer 109, an intra prediction unit 110, an inter-frame prediction unit 111, a coder control unit 112 and a switch 100.

The typical video encoding device divides each frame into blocks called MB (Macro Block) having a 16x16 pixel size, further divides the MB into blocks having a 4x4 pixel size, and assumes the obtained $4 \times 4$ block being divided as a minimum configuration unit for encoding.

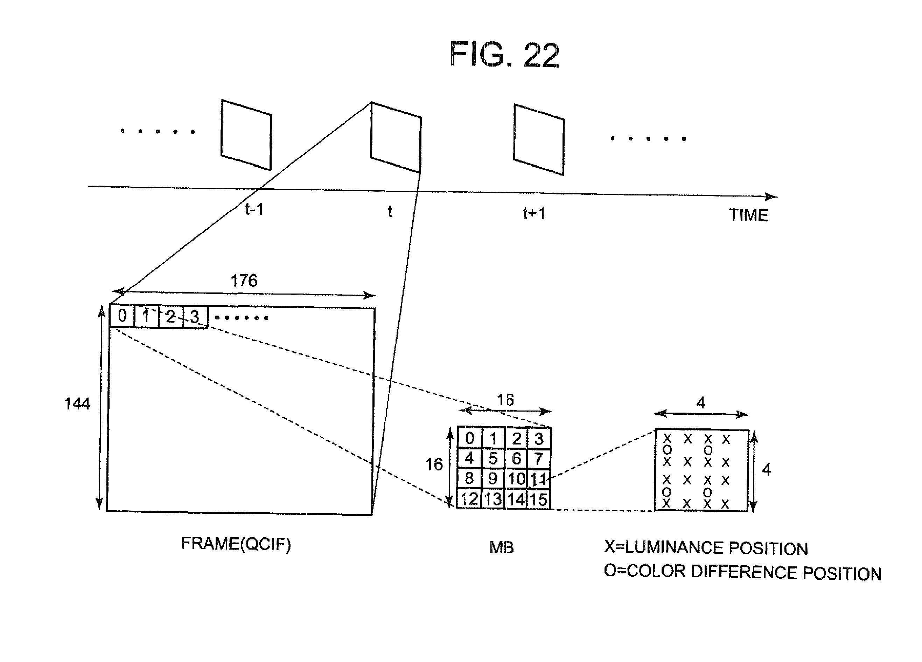

Fig. 22 is an explanatory diagram showing exemplary block division when a frame space resolution is QCIF (Quarter Common Intermediate Format). The operations of the respective units shown in Fig. 21 will be described below with only the luminance pixel value focused for brevity.

The MB buffer 101 stores therein pixel values of MBs to be encoded in an input image frame. The MB to be encoded will be called input MB.

For the input MB supplied from the MB buffer 101, a prediction signal supplied from the intra prediction unit 110 or the inter-frame prediction unit 111 via the switch 100 is reduced. The input MB with the prediction signal reduced will be called predictive error image block below.

The intra prediction unit 110 generates an intra prediction signal by use of a reconstructed image which is stored in the picture buffer 107 and has the same display time as a current frame. The MB encoded by the intra prediction signal will be called intra MB below.

The inter-frame prediction unit 111 generates an inter-frame prediction signal by use of a reference image which has a different display time from a current frame and is stored in the decode picture buffer 109. The MB encoded by the inter-frame prediction signal will be called inter MB below.

The frame encoded only by the intra MB will be called I frame. The frame encoded by both the intra MB and the inter MB will be called P frame. The frame encoded by the inter MB using two reference images at the same time, not only one reference image, for the inter-frame prediction will be called B frame.

The coder control unit 112 compares the intra prediction signal and the inter-frame prediction signal with the input MB stored in the MB buffer 101, selects a prediction signal having a low energy of the predictive error image block, and controls the switch 100. Information on the selected prediction signal is supplied to the entropy encoder 104.

The coder control unit 112 selects a base block size of integer DCT suitable for frequency transformation of the predictive error image block based on the input MB or predictive error image block. The integer DCT means frequency transformation by the base which is obtained by approximating the DCT base by an integer value in the typical video encoding device. The options of the base block size include three block sizes of $16 \times 16$, $8 \times 8$ and $4 \times 4$. As the pixel values of the input MB or predictive error image block are flatter, a larger base block size is selected. Information on the selected base size of the integer DCT is supplied to the frequency transformation unit 102 and the entropy encoder 104. The information on the selected prediction signal and the information on the selected base size of the integer DCT will be called auxiliary information below.

Further, the coder control unit 112 monitors the number of bits in a bit stream output by the entropy encoder 104 for encoding the frame at the target number of bits or less. Then, when the number of bits in the output bit stream is larger than the target number of bits, a quantization parameter for increasing a quantization step size is output, and inversely, when the number of bits in the output bit stream is smaller than the target number of bits, a quantization parameter for reducing the quantization step size is output. In this way, the output bit stream is encoded to approach the target number of bits.

The frequency transformation unit 102 frequency-transforms the predictive error image block at the selected base size of the integer DCT and thereby transforms it from the space domain into the frequency domain. The predictive error transformed into the frequency domain is called conversion coefficient. The frequency transformation may use orthogonal transform such as DCT (Discrete Cosine Transform) or Hadamard transform.

The quantization unit 103 quantizes a conversion coefficient at the quantization step size corresponding to the quantization parameter supplied from the coder control unit 112. A quantization index of the quantized conversion coefficient is also called level.

The entropy encoder 104 entropy-encodes the auxiliary information and the quantization index to be output as bit string or bit stream.

The inverse quantization unit 105 and the inverse conversion unit 106 inversely quantize the quantization index supplied from the quantization unit 103 to obtain a quantization representative value for subsequent encoding, and further perform inverse frequency transformation thereon to return it to the original space domain. The predictive error image block returned to the original space domain will be called reconstructed predictive error image block below. The inversely-quantized quantization index will be called quantization representative value.

The picture buffer 107 stores therein a reconstructed image block in which a prediction signal is added to a reconstructed predictive error image block until all the MBs included in a current frame are encoded. The picture configured by the reconstructed image in the picture buffer 107 will be called reconstructed image picture below.

The deblocking filter unit 108 releases a block distortion from the reconstructed image picture stored in the picture buffer 107. That is, a block distortion is removed.

The decode picture buffer 109 stores therein a reconstructed image picture with a block distortion removed, which is supplied from the deblocking filter unit 108, as a reference image picture. The image of the reference image picture is utilized as a reference image for generating an inter-frame prediction signal.

The video encoding device shown in Fig. 21 generates a bit stream through the above processing.

Citation List

Patent Literature

PLT1: Japanese Patent Application National Publication (Laid-Open) No. 2007-503166 Publication
PLT2: Japanese Patent Application National Publication (Laid-Open) No. 2007-507169 Publication

Non Patent Literature

NPL1: ISO/IEC 14496-10 Advanced Video Coding
NPL2: Steffen Wittmann and Thomas Wedi, "Transmission of Post-Filter Hints For Video Coding Schemes", ICIP2007, USA, September, 2007
NPL3: Toshiba corporation, "Quadtree-based adaptive loop filter", ITU-T, COM16C181, January, 2009
NPL4: L.G. Roberts, "Picture coding using pseudorandom noise", IRE Trans. on Information Theory, vol. IT-8, pp145-154, February, 1962
NPL5: T. Chen, "Elimination of subband coding artifacts using the dithering technique", ICIP94, November, 1994
NPL6: Chono et al., "A complexity Reduction Method for H. 264 Intra Prediction Estimator Using the Characteristics of Hadamard Transform", IEICE Society papers, D-11-52, 2005

Summary of Invention

Technical Problem

A video compressed and extended at a low bit rate with the above technique generates a human-perceptible artifact. A block distortion or ringing distortion is a typical artifact occurring in a video compressed and extended based on block-based encoding.

Non-Patent Literature 2 proposes therein that a Wiener filter is applied to a reconstructed image picture with a block distortion removed in order to reduce a ringing distortion which cannot be removed by a deblocking filter unit. Non-Patent Literature 3 proposes therein that the Wiener filter disclosed in Non-Patent Literature 2 is applied to an encoding in-loop processing to power on/off the Wiener filter in units of local area. However, the Wiener filter disclosed in Non-Patent Literature 2 and Non-Patent Literature 3 is a linear filter. Since the linear filter cannot collapse a specific structured caused by a compression noise, contour and stair-step artifacts cannot be reduced only by the Wiener filter. The Wiener filter is also called least square error filter.

Non-Patent Literature 4 proposes therein that a pseudorandom noise is injected into an image in order to lower human visual sensitivity for contour and stair-step artifacts. Non-Patent Literature 5 proposes therein that a pseudorandom noise is injected into a significant subband conversion coefficient for compressing a still image based on subband conversion encoding. Further, Non-Patent Literature 5 describes therein that a white noise artifact due to a injected pseudorandom noise is restricted by a Wiener filter. However, an adverse effect due to a injected pseudorandom noise for the video encoding using an inter-frame prediction is not considered in Non-Patent Literature 4 and Non-Patent Literature 5. An exemplary adverse effect is a reduction in compression efficiency due to a generated difference between frames caused by a injected pseudorandom noise.

Non-Patent Literature 1 and Non-Patent Literature 2 propose therein that an amount of pseudorandom noise associated with the luminance of part of a current image or an amount of pseudorandom noise associated with an additional noise of the pixels in a previous image is injected in order to address a reduction in compression efficiency caused by a generated difference between frames due to a injected pseudorandom noise.

However, there is not considered video encoding using a Wiener filter disclosed in Non-Patent Literature 2 and Non-Patent Literature 3. Thus, the video encoding device described in Patent Literature 1 and Patent Literature 2 has a problem that the amount of injected pseudorandom noise is lacking and human visual perceptivity for contour and stair-step artifacts cannot be sufficiently lowered for the video encoding using a Wiener filter.

That is, the typical technique has a problem that video encoding and video decoding using an inter-frame prediction, which can efficiently reduce contour and stair-step artifacts, cannot be provided.

Thus, it is an object of the present invention to provide a video encoding device and a video decoding device capable of efficiently reducing contour and stair-step artifacts. Solution to Problem

A video encoding device according to the present invention includes: a prediction means for calculating an intra prediction signal or an inter-frame prediction signal for an image block; an inverse quantization means for inversely quantizing a quantization index of the image block to obtain a quantization representative value; an inverse frequency transformation means for inversely transforming the quantization representative value obtained by the inverse quantization means to obtain a reconstructed predictive error image block; a reconstruction means for adding an intra prediction signal or an inter-frame prediction signal to the reconstructed predictive error image block obtained by the inverse frequency transformation means to obtain a reconstructed image block; a reconstructed image storage means for storing therein the reconstructed image block obtained by the reconstruction means as a reconstructed image picture; a noise inject means for injecting a pseudorandom noise into the reconstructed image picture; a Wiener filter means for applying a Wiener filter to the reconstructed image picture with a pseudorandom noise injected; and a reference image storage means for storing therein the reconstructed image picture to which the Wiener filter is applied as a reference image picture for inter-frame prediction.

A video decoding device according to the present invention includes: an entropy decode means for entropy-decoding a bit string to calculate a quantization index; a prediction means for calculating an intra prediction signal or an inter-frame prediction signal for an image block; an inverse quantization means for inversely quantizing the quantization index to obtain a quantization representative value; an inverse frequency transformation means for inversely transforming the quantization representative value obtained by the inverse quantization means to obtain a reconstructed predictive error image block; a reconstruction means for adding an intra prediction signal or an inter-frame prediction signal to the reconstructed predictive error image block obtained by the inverse frequency transformation means to obtain a reconstructed image block; a reconstructed image storage means for storing the reconstructed image block obtained by the reconstruction means as a reconstructed image picture; a noise inject means for injecting a pseudorandom noise into the reconstructed image picture; a Wiener filter means for applying a Wiener filter to the reconstructed image picture with a pseudorandom noise injected; and a reference image means for storing the reconstructed image picture to which the Wiener filter is applied as a reference image picture for inter-frame prediction.

A video encoding method according to the present invention includes: calculating an intra prediction signal or an inter-frame prediction signal for an image block; inversely quantizing a quantization index of the image block to obtain a quantization representative value; inversely transforming the obtained quantization representative value to obtain a reconstructed predictive error image block; adding an intra prediction signal or an inter-frame prediction signal to the reconstructed predictive error image block to obtain a reconstructed image block; storing the obtained reconstructed image block as a reconstructed image picture in a reconstructed image storage means; injecting a pseudorandom noise into the reconstructed image picture; applying a Wiener filter to the reconstructed image picture with a pseudorandom noise injected; and storing the reconstructed image picture to which the Wiener filter is applied as a reference image picture for inter-frame prediction in a reference image storage means.

A video decoding method according the present invention: includes entropy-decoding a bit string to calculate a quantization index; calculating an intra prediction signal or an inter-frame prediction signal for an image block; inversely quantizing the quantization index to obtain a quantization representative value; inversely transforming the obtained quantization representative value to obtain a reconstructed predictive error image block; adding an intra prediction signal or an inter-frame prediction signal to the reconstructed predictive error image block to obtain a reconstructed image block; storing the obtained reconstructed image block as a reconstructed image picture in a reconstructed image storage means; injecting a pseudorandom noise into the reconstructed image picture; applying a Wiener filter to the reconstructed image picture with a pseudorandom noise injected; and storing the reconstructed image picture to which the Wiener filter is applied as a reference image picture for inter-frame prediction in a reference image means.

A video encoding program according the present invention for causing a computer to execute: a processing of calculating an intra prediction signal or an inter-frame prediction signal for an image block; a processing of inversely quantizing a quantization index of the image block to obtain a quantization representative value; a processing of inversely transforming the obtained quantization representative value to obtain a reconstructed predictive error image block; a processing of adding an intra prediction signal or an inter-frame prediction signal to the reconstructed predictive error image block to obtain a reconstructed image block; a processing of storing the obtained reconstructed image block as a reconstructed image picture in a reconstructed image storage means; a processing of injecting a pseudorandom noise into the reconstructed image picture; a processing of applying a Wiener filter to the reconstructed image picture with a pseudorandom noise injected; and a processing of storing the reconstructed image picture to which the Wiener filter is applied as a reference image picture for inter-frame prediction in a reference image storage means.

A video decoding program according to the present invention for causing a computer to execute: a processing of entropy-decoding a bit string to calculate a quantization index; a processing of calculating an intra prediction signal or an inter-frame prediction signal for an image block; a processing of inversely quantizing the quantization index to obtain a quantization representative value; a processing of inversely transforming the obtained quantization representative value to obtain a reconstructed predictive error image block; a processing of adding an intra prediction signal or an inter-frame prediction signal to the reconstructed predictive error image block to obtain a reconstructed image block; a processing of storing the obtained reconstructed image block as a reconstructed image picture in a reconstructed image storage means; a processing of injecting a pseudorandom noise into the reconstructed image picture; a processing of applying a Wiener filter to the reconstructed image picture with a pseudorandom noise injected; and a processing of storing the reconstructed image picture to which the Wiener filter is applied as a reference image picture for inter-frame prediction in a reference image means.

Advantageous Effects of Invention

According to the present invention, contour and stair-step artifacts can be efficiently reduced in video encoding and video decoding using an inter-frame prediction.

Brief Description of Drawings

[Fig. 1] Fig. 1 is a block diagram showing a video encoding device according to a first embodiment.
[Fig. 2] Fig. 2 is an explanatory diagram for explaining how to reset a pseudorandom noise generator.
[Fig. 3] Fig. 3 is a block diagram showing a video encoding device according to a second embodiment.
[Fig. 4] Fig. 4 is a block diagram showing a video decoding device according to a third embodiment.
[Fig. 5] Fig. 5 is a block diagram showing a video decoding device according to a fourth embodiment.
[Fig. 6] Fig. 6 is a block diagram showing a structure in which a noise injector for determining a pseudorandom noise injecting position based on a magnitude of a variation of pixel values is applied to the video encoding device according to the first embodiment.
[Fig. 7] Fig. 7 is a block diagram showing a structure in which a noise injector for determining a pseudorandom noise injecting position based on a magnitude of a variation of pixel values is applied to the video encoding device according to the second embodiment.
[Fig. 8] Fig. 8 is a block diagram showing a structure in which a noise injector for determining a pseudorandom noise injecting position based on a magnitude of a variation of pixel values is applied to the video decoding device according to the third embodiment.
[Fig. 9] Fig. 9 is a block diagram showing a structure in which a noise injector for determining a pseudorandom noise injecting position based on a magnitude of a variation of pixel values is applied to the video decoding device according to the fourth embodiment.
[Fig. 10] Fig. 10 is a block diagram showing a structure in which a noise injector for estimating a variation is applied to the video encoding device according to the first embodiment.
[Fig. 11] Fig. 11 is a block diagram showing a structure in which a noise injector for estimating a variation is applied to the video encoding device according to the second embodiment.

[Fig. 12] Fig. 12 is a block diagram showing a structure in which a noise injector for estimating a variation is applied to the video decoding device according to the third embodiment.

[Fig. 13] Fig. 13 is a block diagram showing a structure in which a noise injector for estimating a variation is applied to the video decoding device according to the fourth embodiment.

[Fig. 14] Fig. 14 is an explanatory diagram for explaining a prediction type for a flat prediction signal.

[Fig. 15] Fig. 15 is an explanatory diagram for explaining a prediction type for a flat prediction signal.

[Fig. 16] Fig. 16 is a block diagram showing an exemplary structure of an information processing system capable of realizing the functions of a video encoding device and a video decoding device according to the present invention.

[Fig. 17] Fig. 17 is a block diagram showing a main structure of the video encoding device according to the present invention.

[Fig. 18] Fig. 18 is a block diagram showing a main structure of the video decoding device according to the present invention.

[Fig. 19] Fig. 19 is a flowchart showing the processing of the video encoding device according to the present invention.

[Fig. 20] Fig. 20 is a flowchart showing the processing of the video decoding device according to the present invention.

[Fig. 21] Fig. 21 is a block diagram showing a structure of a typical video encoding device.

[Fig. 22] Fig. 22 is an explanatory diagram showing exemplary block division.

Description of Embodiments

First embodiment

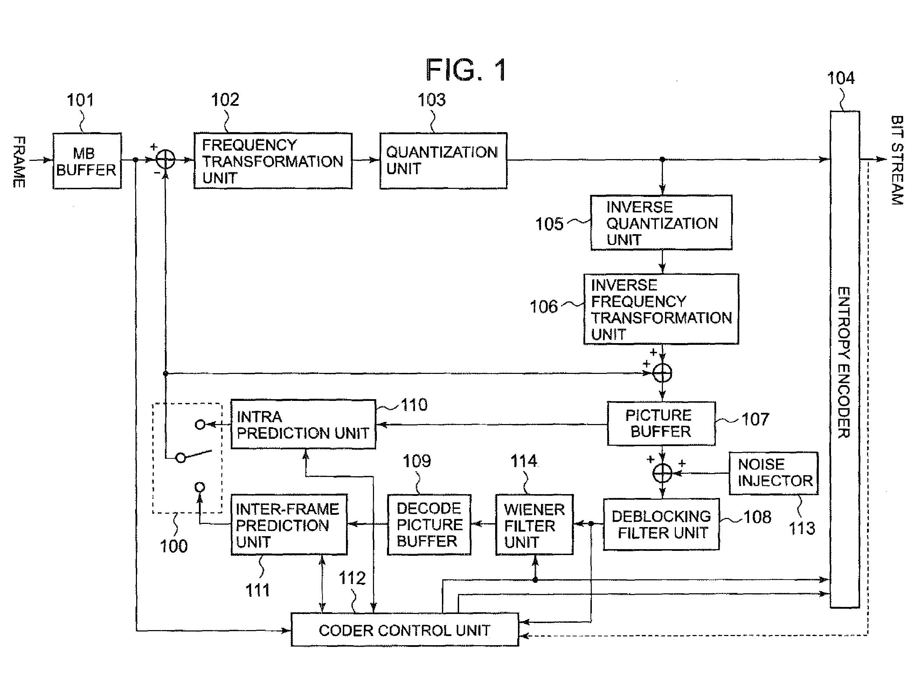

Fig. 1 is a block diagram showing a first embodiment according to the present invention, which shows a video encoding device in which a pseudorandom noise is injected into a reconstructed image picture before removal of a block distortion and a Wiener filter is applied to a reconstructed image picture after removal of a block distortion.

As shown in Fig. 1, the video encoding device according to the present embodiment includes a noise injector 113 and a Wiener filter unit 114 in addition to a MB buffer 101, a frequency transformation unit 102, a quantization unit 103, an entropy encoder 104, an inverse quantization unit 105, an inverse frequency transformation unit 106, a picture buffer 107, a deblocking filter unit 108, a decode picture buffer 109, an intra prediction unit 110, an inter-frame prediction unit 111, a coder control unit 112 and a switch 100.

The video encoding device according to the present embodiment is different from the typical video encoding device shown in Fig. 21 in that the noise injector 113 and the Wiener filter unit 114 are provided and a pseudorandom noise supplied from the noise injector 113 is injected into a reconstructed image picture stored in the picture buffer 107 and is supplied to the deblocking filter unit 108. In the following description, the operations of the noise injector 113 and the Wiener filter unit 114 which are characteristic of the video encoding device according to the present embodiment will be specifically described in detail.

The MB buffer 101 stores therein pixel values of MBs to be encoded in an input image frame.

A prediction signal supplied from the intra prediction unit 110 or the inter-frame prediction unit 111 via the switch 100 is reduced from the input MB supplied from the MB buffer 101.

The intra prediction unit 110 generates an intra prediction signal by use of a reconstructed image which is stored in the picture buffer 107 and has the same display time as a current frame. Information on the intra prediction includes an intra prediction mode indicating a block size for intra prediction, and an intra prediction direction indicating a direction therefor.

The inter-frame prediction unit 111 generates an inter-frame prediction signal by use of a reference image which has a different display time from a current frame and is stored in the decode picture buffer 109. Information on the inter-frame prediction may be an inter-frame prediction mode indicating a block size for inter-frame prediction, an inter-frame prediction direction indicating a direction for inter-frame prediction, a reference picture index for identifying a reference picture stored in the decode picture buffer 109, a motion vector for inter-frame prediction, and the like.

The coder control unit 112 compares an intra prediction signal and an inter-frame prediction signal with an input MB stored in the MB buffer 101, selects a prediction signal having a low energy of the predictive error image block, and controls the switch 100. Information on the selected prediction signal is supplied to the entropy encoder 104.

The coder control unit 112 selects a base block size of the integer DCT suitable for frequency transformation of the predictive error image block based on the input MB or the predictive error image block. The selected base size of the integer DCT is supplied to the frequency transformation unit 102 and the entropy encoder 104. Typically, as the pixel values of the input MB or the predictive error image block are flatter, a larger base block size is selected. In other words, a reconstructed image is flat in a reconstructed image block having a larger base block size. When the prediction signal having a low energy of the predictive error image block is an intra prediction signal, the selected base size of the integer DCT is the same as the block size in the intra prediction mode.

The coder control unit 112 monitors the number of bits in the bit stream output from the entropy encoder 104 in order to encode the frames at the target number of bits or less. When the number of bits in the output bit stream is larger than the target number of bits, a quantization parameter for increasing a quantization step size is output, and inversely when the number of bits in the output bit stream is smaller than the target number of bits, a quantization parameter for reducing the quantization step size is output. In this way, the output bit stream is encoded to approach the target number of bits.

The frequency transformation unit 102 frequency-transforms a predictive error image block at the selected base size of the integer DCT, and transforms it from the space domain to the frequency domain.

The quantization unit 103 quantizes a conversion coefficient at the quantization step size corresponding to the quantization parameter supplied from the coder control unit 112.

The entropy encoder 104 entropy-encodes the information on the selected prediction signal, the base size of the integer DCT, and the quantization index, and outputs a bit string or bit stream.

The inverse quantization unit 105 and the inverse conversion unit 106 inversely quantize the quantization index supplied from the quantization unit 103 for subsequent encoding, and further perform inverse frequency transformation thereon to return it to the original space domain. That is, a reconstructed predictive error image block is generated.

The picture buffer 107 stores therein a reconstructed image block in which a prediction signal is added to a reconstructed predictive error image block until all the MBs included in a current frame are encoded.

The noise injector 113 generates a pseudorandom noise n(i). The pseudorandom noise n(i) may be generated based on the linear congruent method by Formula (1), for example.

$$N(i) = (a \times n(i-1) + b) \% c \qquad (1)$$

where a, b and c are parameters for determining a cycle of the pseudorandom noise, and $a > 0$, $b > 0$, $a \leq c$, and $b < c$ are assumed. X%y indicates a processing of returning the remainder obtained by dividing x by y.

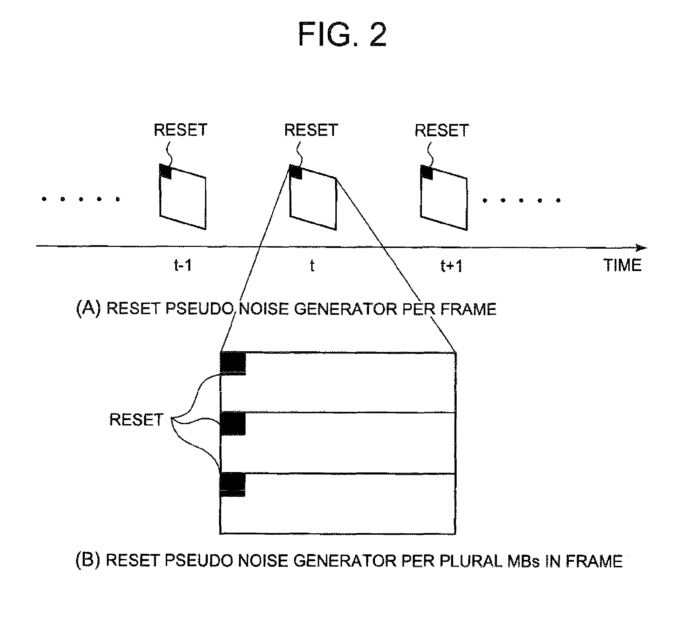

Any generation method may be used as the pseudorandom noise generation method in the present invention, but it is desirable that the pseudorandom noise generator can be reset in a predetermined unit of video encoding or video decoding. Fig. 2 is an explanatory diagram for explaining other embodiment in which the pseudorandom noise generator is reset in a predetermined unit of video encoding or video decoding. The predetermined unit of video encoding or video decoding may be a head MB of each frame (see Fig. 2(A)), multiple MBs in each frame (see Fig. 2(B)), MB pair using a dependence relationship between the pixels in a reconstructed image, and the like. The pseudorandom noise generator is reset in the predetermined unit of video encoding or video decoding so that random accessibility for video decoding can be improved in the example shown in Fig. 2(A) and parallel processability for video encoding and video decoding can be improved in the example shown in Fig. 2(B), for example.

For example, the coder control unit 112 may reset the initial value n(0) of the pseudorandom noise n(i) by a predetermined value in the pseudorandom noise generator based on the linear congruent method in the predetermined unit of video encoding. The video encoding device may embed the predetermined value for reset or information for identifying the predetermined value in a bit stream. The video decoding device can read the predetermined value for reset or the information for identifying the predetermined value, which is embedded in the bit stream, to generate a pseudorandom noise based on the information, thereby generating the same pseudorandom noise as that in the video encoding side so that a mismatch in the image due to the pseudorandom noise can be avoided between the video encoding and the video decoding.

An adder between the picture buffer 107 and the deblocking filter unit 108 injects a pseudorandom noise $n_{i,j}$ (n(i) in Formula (1) is assumed to be rearranged in a proper rule) by Formula (2) at the pixel $r_{ij}$ at each position (i, j) $\{0 \leq i \leq width-1, 0 \leq j \leq height-1\}$ in the reconstructed image picture.

$$r_{ij} = ((r_{ij} << 6) + (n_{i,j} \% 64) + 32) >> 6 \qquad (2)$$

where width and height are a horizontal resolution and a vertical resolution for a frame, respectively.

As expressed in Formula (2), the remainder obtained by the division by 64 is added such that the absolute value of the influence intensity of the pseudorandom noise is 1 pixel or less. The absolute value of the influence intensity of the pseudorandom noise is assumed as 1 pixel or less so that a reduction in PSNR (Peak Signal to Noise Ratio) due to the inj ected pseudorandom noise can be restricted.

The deblocking filter unit 108 removes a block distortion from the reconstructed image picture with a noise injected. The reconstructed image picture with a block distortion removed will be called block-distortion-removed reconstructed image picture below.

The coder control unit 112 uses an input frame (input picture) and a block-distortion-removed reconstructed image picture to configure a Wiener filter in which a mean square error of the block-distortion-removed reconstructed image picture is minimum.

Assuming that the input picture is S, the block-distortion-removed reconstructed image picture before application of the Wiener filter is X, and the block-distortion-removed reconstructed image picture after application of the Wiener filter is X', the mean square error E $[e^2]$ is defined by Formula (3).

[Equation 1]

$$E[e^2] = E[(x'-s)^2] = E[(x*h-s)^2]$$

$$= \sum_{\tau}^{n-1} \sum_{\theta}^{n-1} h(\tau)h(\theta)R_{xx}(\tau-\theta) - E[s^2] - 2\sum_{\tau}^{n-1} h(\tau)R_{sx}(\tau) \qquad \cdots (3)$$

where * is a convolution operation, $h(\tau)$ $(0 \leq \tau \leq n-1)$ is a Wiener filter coefficient, $R_{XX}$ is an autocorrelation coefficient of X, and $R_{SX}$ is a cross-correlation coefficient between S and X. When Formula (3) is partially differentiated for each filter coefficient and the left-hand side is assumed as 0, the following relational equation (Wiener-hops equations) by Formula (4) is obtained.

[Equation 2]

$$\begin{bmatrix} R_{SX}(0) \\ R_{SX}(1) \\ \vdots \\ R_{SX}(n-1) \end{bmatrix} = \begin{bmatrix} R_{XX}(0) & R_{XX}(1) & \cdots & R_{XX}(n-1) \\ R_{XX}(1) & R_{XX}(0) & \cdots & R_{XX}(n-2) \\ \vdots & \vdots & \ddots & \vdots \\ R_{XX}(n-1) & R_{XX}(n-2) & \cdots & R_{XX}(0) \end{bmatrix} \begin{bmatrix} h(0) \\ h(1) \\ \vdots \\ h(n-1) \end{bmatrix} \qquad \cdots (4)$$

Assuming that the column vector in the left-hand side is Y, and the matrix and the column vector in the right-hand side are A and X, respectively, Y=AX is obtained and the filter coefficient h $(\tau)$ can be calculated by use of Gaussian elimination. That is, a Wiener filter can be configured.

The Wiener filter h calculated by the coder control unit 112 is supplied to the Wiener filter unit 114 and the entropy encoder 104. The entropy encoder 104 multiplexes the filter coefficient of the supplied Wiener filter h on a bit stream.

The Wiener filter unit 114 applies the calculated Wiener filter h to the block-distortion-removed reconstructed image picture X. It is formulated as Formula (5).

$$X' = X*h \qquad (5)$$

The decode picture buffer 109 stores the block-distortion -removed reconstructed image picture X' after application of the Wiener filter as a reference image picture. The image of the reference image picture is used as a reference image for generating an inter-frame prediction signal.

The video encoding device according to the present embodiment generates a bit stream through the above processing.

The video encoding device according to the present embodiment injects a pseudorandom noise into a reconstructed image picture before removal of a block distortion and applies a Wiener filter to the reconstructed image picture with a block distortion removed. The injected pseudorandom noise can cause a reduction in stair-step artifacts to the deblocking filter unit particularly in a flat area. A reduction in contour artifacts can be caused to the Wiener filter particular in a flat area. That is, in the video encoding device according to the present embodiment, a injected pseudorandom noise and a Wiener filter are suitably combined in order to efficiently reduce contour and stair-step artifacts. Further, a pseudorandom noise for which the absolute value of the influence intensity of the pseudorandom noise is 1 pixel or less is utilized so that both a reduction in PSNR due to a injected pseudorandom noise and a reduction in compression efficiency due to a generated difference between frames can be restricted.

Second embodiment

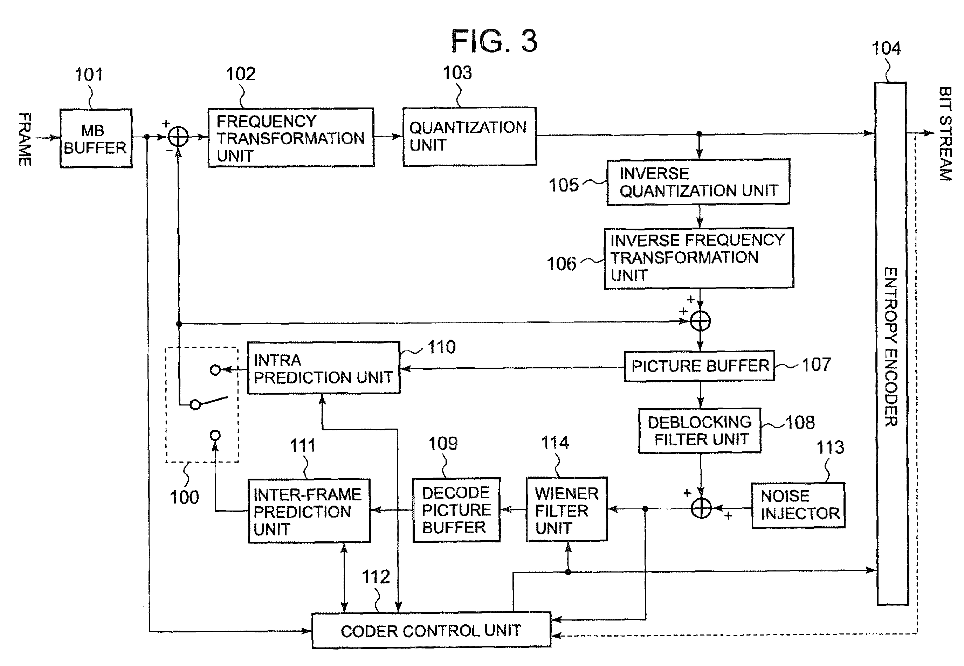

Fig. 3 is a block diagram showing a second embodiment according to the present invention, which shows a video encoding device in which a pseudorandom noise is injected into a reconstructed image picture with a block distortion removed and a Wiener filter is applied.

As shown in Fig. 3, the video encoding device according to the present embodiment includes a noise injector 113 and a Wiener filter unit 114 in addition to a MB buffer 101, a frequency transformation unit 102, a quantization unit 103, an entropy encoder 104, an inverse quantization unit 105, an inverse frequency transformation unit 106, a picture buffer 107, a deblocking filter unit 108, a decode picture buffer 109, an intra prediction unit 110, an inter-frame prediction unit 111, a coder control unit 112 and a switch 100.

The video encoding device according to the present embodiment is different from the video encoding device according to the first embodiment in that a reconstructed image picture from which a block distortion is removed by the deblocking filter unit 108 is injected with a pseudorandom noise supplied from the noise injector 113 and then is supplied to the Wiener filter unit 114.

The MB buffer 101 stores therein pixel values of MBs to be encoded in an input image frame.

A prediction signal supplied from the intra prediction unit 110 or the inter-frame prediction unit 111 via the switch 100 is reduced from the input MB supplied from the MB buffer 101.

The intra prediction unit 110 generates an intra prediction signal by use of a reconstructed image which is stored in the picture buffer 107 and has the same display time as a current frame. Information on intra prediction includes an intra prediction mode indicating a block side for intra prediction and an intra prediction direction indicating a direction therefor.

The inter-frame prediction unit 111 generates an inter-frame prediction signal by use of a reference image which has a different display time from a current frame and is stored in the decode picture buffer 109. Information on inter-frame prediction includes an inter-frame prediction mode indicating a block size for inter-frame prediction, an inter-frame prediction direction indicating a direction for inter-frame prediction, a reference picture index for identifying a reference picture stored in the decode picture buffer 109, a motion vector for inter-frame prediction, and the like.

The coder control unit 112 compares the intra prediction signal and the inter-frame prediction signal with the input MB stored in the MB buffer 101, selects a prediction signal having a low energy of the predictive error image block, and controls the switch 100. Information on the selected prediction signal is supplied to the entropy encoder 104.

The coder control unit 112 selects a base block size of integer DCT suitable for frequency transformation of the predictive error image block based on the input MB or predictive error image block. The selected base size of the integer DCT is supplied to the frequency transformation unit 102 and the entropy encoder 104. Typically, as the pixel values of the input MB or predictive error image block are flatter, a larger base block size is selected. In other words, a reconstructed image is flat in a reconstructed image block having a larger base block size. When the prediction signal having a low energy of the predictive error image block is an intra prediction signal, the selected base size of the integer DCT is the same as the block size in the intra prediction mode.

Further, the coder control unit 112 monitors the number of bits in a bit stream output by the entropy encoder 104 for encoding the frame at the target number of bits or less. Then, when the number of bits in the output bit stream is larger than the target number of bits, a quantization parameter for increasing a quantization step size is output, and inversely, when the number of bits in the output bit stream is smaller than the target number of bits, a quantization parameter for reducing the quantization step size is output. In this way, the output bit stream is encoded to approach the target number of bits.

The frequency transformation unit 102 frequency-transforms the predictive error image block at the selected base size of the integer DCT and thereby transforms it from the space domain into the frequency domain.

The quantization unit 103 quantizes a conversion coefficient at the quantization step size corresponding to the quantization parameter supplied from the coder control unit 112.

The entropy encoder 104 entropy-encodes the information on the selected prediction signal, the base size of the integer DCT, and the quantization index, and outputs a bit string or bit stream.

The inverse quantization unit 105 and the inverse conversion unit 106 inversely quantize the quantization index supplied from the quantization unit 103 for subsequent encoding, and further perform inverse frequency transformation thereon to return it to the original space domain. That is, a reconstructed predictive error image block is generated.

The picture buffer 107 stores therein a reconstructed image block in which a predictive signal is added to a reconstructed predictive error image block until all the MBs included in a current frame are encoded.

The deblocking filter unit 108 removes a block distortion from the reconstructed image picture stored in the picture buffer 107. That is, a block-distortion-removed reconstructed image picture is generated.

The noise injector 113 generates a pseudorandom noise n(i) similar to the first embodiment.

An adder between the deblocking filter unit 108 and the Wiener filter unit 114 injects a pseudorandom noise $n_{i,j}$ (n(i) in Formula (1) is assumed to be rearranged in a proper rule) by Formula (6) at the pixel $x_{ij}$ at each position (i, j) {$0 \leq i \leq$ width-1, $0 \leq j \leq$ height-1} in the reconstructed image picture, similar to the first embodiment.

$$x_{ij} = ( ( x_{ij} << 6 ) + ( n_{i,\ j} \% 64 ) + 32 ) >> 6 \qquad (6)$$

Similar to the first embodiment, the coder control unit 112 uses an input frame (input picture) and a block-distortion--removed reconstructed image picture with a pseudorandom noise injected to calculate the Wiener filter h in which the mean square error of the reconstructed image picture with a block distortion removed is minimum.

The Wiener filter h calculated by the coder control unit 112 is supplied to the Wiener filter unit 114 and the entropy encoder 104. The entropy encoder 104 multiplexes the filter coefficient of the supplied Wiener filter h on a bit stream.

The Wiener filter unit 114 applies the calculated Wiener filter h to the block-distortion-removed reconstructed image picture X, similar to the first embodiment. It is formulated as Formula (7).

$$X' = X * h \qquad (7)$$

The decode picture buffer 109 stores the block-distortion-removed image picture X' after application of the Wiener filter as a reference image picture. The image of the reference image picture is used as a reference image for generating an inter-frame prediction signal.

The video encoding device according to the present embodiment generates a bit stream through the above processing.

The video encoding device according to the present embodiment injects a pseudorandom noise into a reconstructed image picture with a block distortion removed and applies a Wiener filter to the reconstructed image picture with a block distortion removed. The injected pseudorandom noise can cause a reduction in stair-step artifacts to the deblocking filter unit particularly in a flat area. A reduction in contour artifacts can be caused to the Wiener filter particular in a flat area. That is, in the video encoding device according to the present embodiment, a injected pseudorandom noise and a Wiener filter are suitably combined in order to efficiently reduce contour and stair-steps artifacts. Further, a pseudorandom noise for which the absolute value of the influence intensity of the pseudorandom noise is 1 pixel or less is utilized so that both a reduction in PSNR due to a injected pseudorandom noise and a reduction in compression efficiency due to a generated difference between frames can be restricted.

Third embodiment

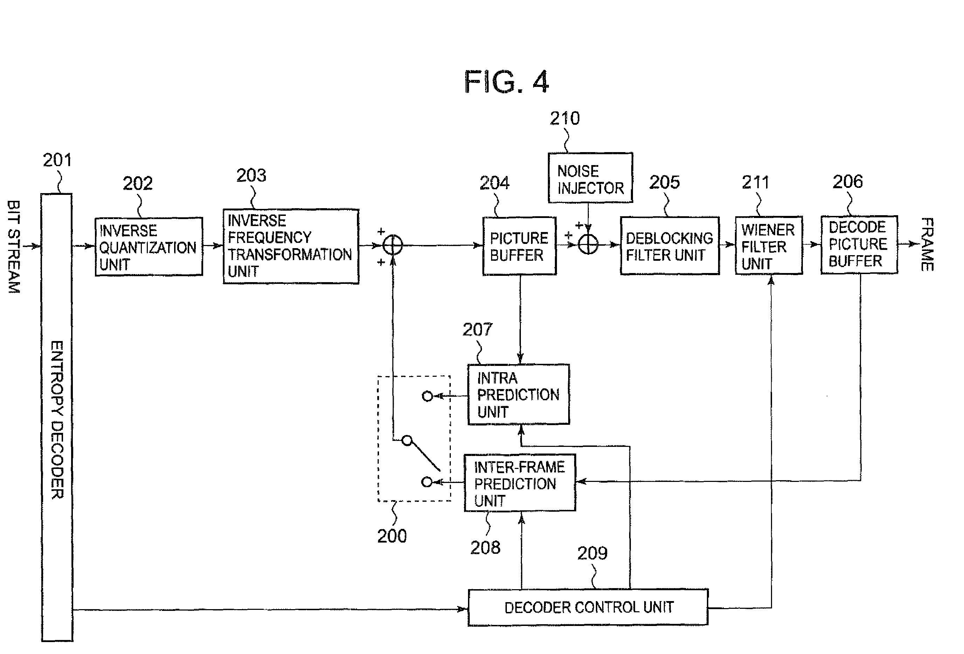

Fig. 4 is a block diagram showing a third embodiment according to the present invention, which shows a video decoding device in which a pseudorandom noise is injected into a reconstructed image picture with a block distortion removed and a Wiener filter is applied. The video decoding device according to the present embodiment corresponds to the video encoding device according to the first embodiment.

As shown in Fig. 4, the video decoding device according to the present embodiment includes a noise injector 210 and a Wiener filter 211 in addition to an entropy decoder 201, an inverse quantization unit 202, an inverse frequency transformation unit 203, a picture buffer 204, a deblocking filter unit 205, a decode picture buffer 206, an intra prediction unit 207, an inter-frame prediction unit 208, a decoder control unit 209 and a switch 200.

The entropy decoder 201 entropy-decodes a bit stream and supplies information on a prediction signal of a MB to be decoded, a base size of the integer DCT, and a quantization index to the inverse quantization unit 202 and the decoder control unit 209. A filter coefficient multiplexed on the bit stream is supplied to the decoder control unit 209.

The intra prediction unit 207 generates, for an intra MB, an intra prediction signal by use of a reconstructed image which has the same display time as a currently-decoded frame and is stored in the picture buffer 204, based on the entropy-decoded intra prediction mode and intra prediction direction, which are supplied via the decoder control unit 209, and supplies it to the switch 200.

The inter-frame prediction unit 208 generates, for an inter MB, an inter-frame prediction signal by use of a reference image which has a different display time from a currently-decoded frame and is stored in the decode picture buffer 206, based on the entropy-decoded inter-frame prediction mode, inter-frame prediction direction and motion vector, which are supplied via the decoder control unit 209, and supplies it to the switch 200.

The decoder control unit 209 controls the switch 200 based on the information on the entropy-decoded prediction signal (intra MB or inter MB), and outputs an intra prediction signal or an inter-frame prediction signal as a prediction signal. A filter coefficient supplied <u>from</u> the entropy decoder 201 is supplied to the Wiener filter unit 211.

The inverse quantization unit 202 and the inverse conversion unit 203 inversely quantize the quantization index supplied from the entropy decoder 201 for subsequent encoding, and further perform inverse frequency transformation thereon to return it to the original space domain. That is, a reconstructed predictive error image block is generated.

The picture buffer 204 stores therein a reconstructed image block in which a prediction signal is added to a reconstructed predictive error image block until all the MBs included in a current frame are encoded.

The noise injector 113 generates a pseudorandom noise n(i) similar to the first embodiment.

An adder between the picture buffer 204 and the deblocking filter unit 205 injects a pseudorandom noise into a reconstructed image picture similar to the first embodiment.

The deblocking filter unit 205 removes a block distortion from a reconstructed image picture with a noise injected. That is, a block-distortion-removed reconstructed image picture is generated.

The Wiener filter 211 applies the Wiener filter h supplied from the decoder control unit 209 to a reconstructed image picture with a block distortion removed similar to the first embodiment.

The decode picture buffer 206 stores therein a block-distortion-removed image picture after application of the Wiener filter as a reference image picture. The reference image picture is output as an extension frame at a proper display timing.

The video decoding device according to the present embodiment extends a bit streams through the above processing.

The video decoding device according to the present embodiment injects a pseudorandom noise into a reconstructed image picture before removal of a block distortion and applies a Wiener filter to the reconstructed image picture with a block distortion removed. The injected pseudorandom noise can cause a reduction in stair-step artifacts to the deblocking filter unit particularly in a flat area. A reduction in contour artifacts can be caused to the Wiener filter particular in a flat area. Consequently, stair-step and contour artifacts in an extension frame can be efficiently reduced.

Fourth embodiment

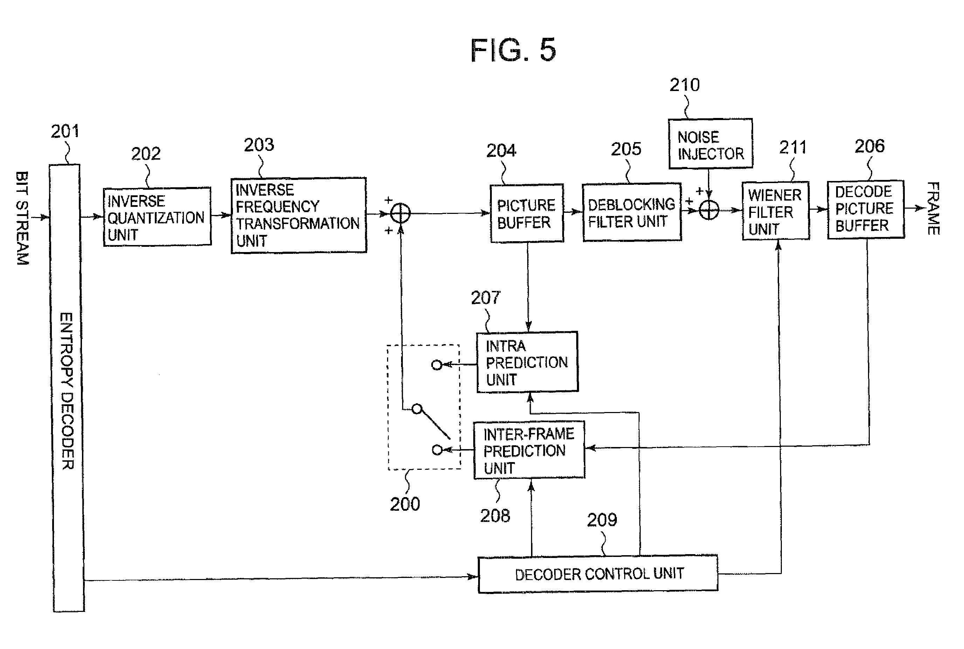

Fig. 5 is a block diagram showing a fourth embodiment according to the present invention, which shows a video decoding device in which a pseudorandom noise is injected into a reconstructed image picture before removal of a block distortion and a Wiener filter is applied to a reconstructed image picture after removal of a block distortion. The video decoding device according to the present embodiment corresponds to the video encoding device according to the second embodiment.

As shown in Fig. 5, the video decoding device according to the present embodiment includes a noise injector 210 and a Wiener filter 211 in addition to an entropy decoder 201, an inverse quantization unit 202, an inverse frequency transformation unit 203, a picture buffer 204, a deblocking filter unit 205, a decode picture buffer 206, an intra prediction unit 207, an inter-frame prediction unit 208, a decoder control unit 209 and a switch 200.

The video decoding device according to the present embodiment is different from the video decoding device according to the third embodiment shown in Fig. 4 in that a reconstructed image picture from which a block distortion is removed by the deblocking filter unit 205 is injected with a pseudorandom noise supplied from the noise injector 210 and is supplied to the Wiener filter 211.

The entropy decoder 201 entropy-decodes a bit stream, and supplies information on a prediction signal of a MB to be decoded, a base size of the integer DCT, and a quantization index to the inverse quantization unit 202 and the decoder control unit 209. A filter coefficient multiplexed on the bit stream is also supplied to the decoder control unit 209.

The intra prediction unit 207 generates, for an intra MB, an intra prediction signal by use of a reconstructed image which has the same display time as a currently-decoded frame and is stored in the picture buffer 204, based on the entropy-decoded intra prediction mode and intra prediction direction, which are supplied via the decoder control unit 209, and supplies it to the switch 200.

The inter-frame prediction unit 208 generates, for an inter MB, an inter-frame prediction signal by use of a reference image which has a different display time from a currently-decoded frame and is stored in the decode picture buffer 206, based on the entropy-decoded inter-frame prediction mode, inter-frame prediction direction and motion vector, which are supplied via the decoder control unit 209, and supplies it to the switch 200.

The decoder control unit 209 controls the switch 200 and supplies an intra prediction signal or an inter-frame prediction signal as a prediction signal based on the information on the entropy-decoded prediction signal (intra MB or inter MB). A filter coefficient from the entropy decoder 201 is supplied to the Wiener filter unit 211.

The inverse quantization unit 202 and the inverse conversion unit 203 inversely quantize the quantization index supplied from the entropy decoder 201 for subsequent encoding, and further perform inverse frequency transformation thereon to return to the original space domain. That is, a reconstructed predictive error image block is generated.

The picture buffer 204 stores therein a reconstructed image block in which a prediction signal is added to a reconstructed predictive error image block until all the MBs included in a current frame are decoded.

The noise miser 113 generates a pseudorandom noise n(i) similar to the first embodiment.

The adder between the picture buffer 204 and the deblocking filter unit 205 injects a pseudorandom noise into a reconstructed image picture similar to the first embodiment.

The deblocking filter unit 205 removes a block distortion from a reconstructed image picture with a noise injected. That is, a block-distortion-removed reconstructed image picture is generated.

The Wiener filter 211 applies the Wiener filter h supplied from the decoder control unit 209 to the reconstructed image picture with a block distortion removed similar to the first embodiment.

The decode picture buffer 206 stores therein a block-distortion-removed image picture after application of the Wiener filter as a reference image picture. The reference image picture is output as an extension frame at a proper display timing.

The video decoding device according to the present embodiment extends a bit streams through the above processing.

The video decoding device according to the present embodiment injects a pseudorandom noise into a reconstructed image picture with a block distortion removed and applies a Wiener filter to the reconstructed image picture with a block distortion removed. The injected pseudorandom noise can cause a reduction in contour artifacts to the Wiener filter particularly in a flat area. Consequently, stair-step and contour artifacts in an extension frame can be efficiently reduced.

Other embodiment will be described below. There is considered other embodiment in which a variation of pixel values is utilized.

Contour and stair-step artifacts tend to be conspicuous in a flat image area having a small variation of pixel values. There may be considered an embodiment in which the noise injector calculates a variation of pixel values in a reconstructed image and determines a pseudorandom noise injecting position based on a magnitude of the calculated variation of the pixel values in terms of the tendency. The variation of the pixel values is used to inject an appropriate amount of pseudorandom noise, thereby lowering human visual perceptivity for contour and stair-step artifacts.

For example, the noise injector calculates the variation $pV_{i,j}$ of the peripheral pixel value ($x_{i+m, j+n}$ {$-w \leq m \leq w$, $-h \leq n \leq h$}) by Formula (8) for the pixel $x_{ij}$ at each position (i, j) {$0 \leq i \leq$ width-1, $0 \leq j \leq$ height-1} in the reconstructed image picture.
[Equation 3]

$$pV_{i,j} = \sum_{n=-h}^{h} \sum_{m=-w}^{w} \left\{ \left| x_{i+m, j+n} - x_{i+m+1, j+n} \right| + \left| x_{i+m, j+n} - x_{i+m, j+n+1} \right| \right\} \quad \cdots (8)$$

The pseudorandom noise $n_{i,j}$ is injected into only the pixel $x_{ij}$ at the position where $pV_{i,j}$ is smaller than a predetermined threshold th, based on Formula (9).
[Equation 4]

$$x_{ij} = \begin{cases} ((x_{ij} << 6) + (n_{ij} \% 64) + 32) >> 6 & \cdots \quad \text{if } (pV_{i,j} < th) \\ x_{ij} & \cdots \quad \text{Otherwise} \end{cases} \quad \cdots (9)$$

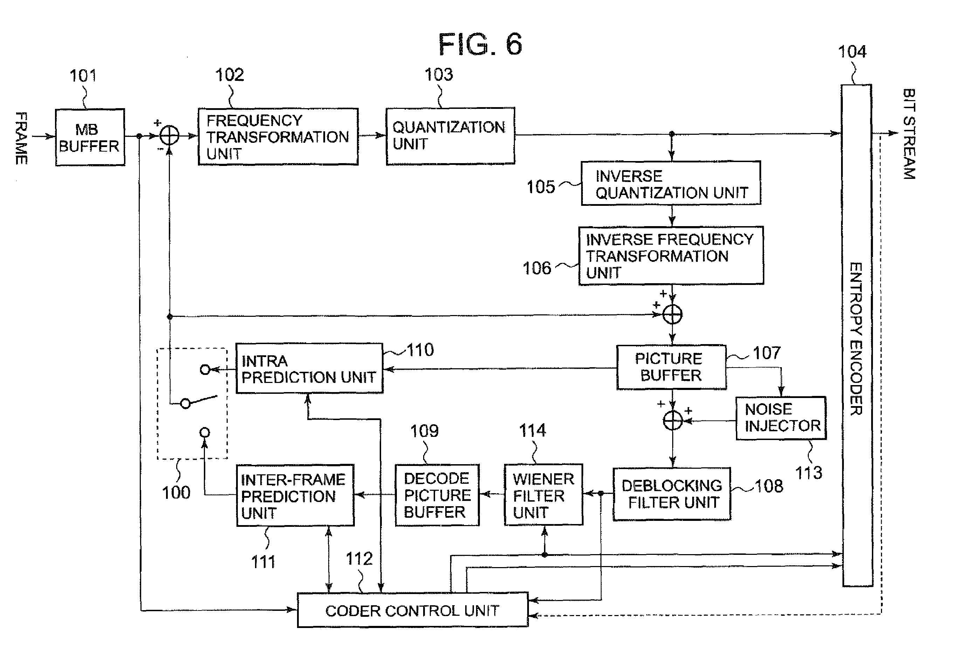

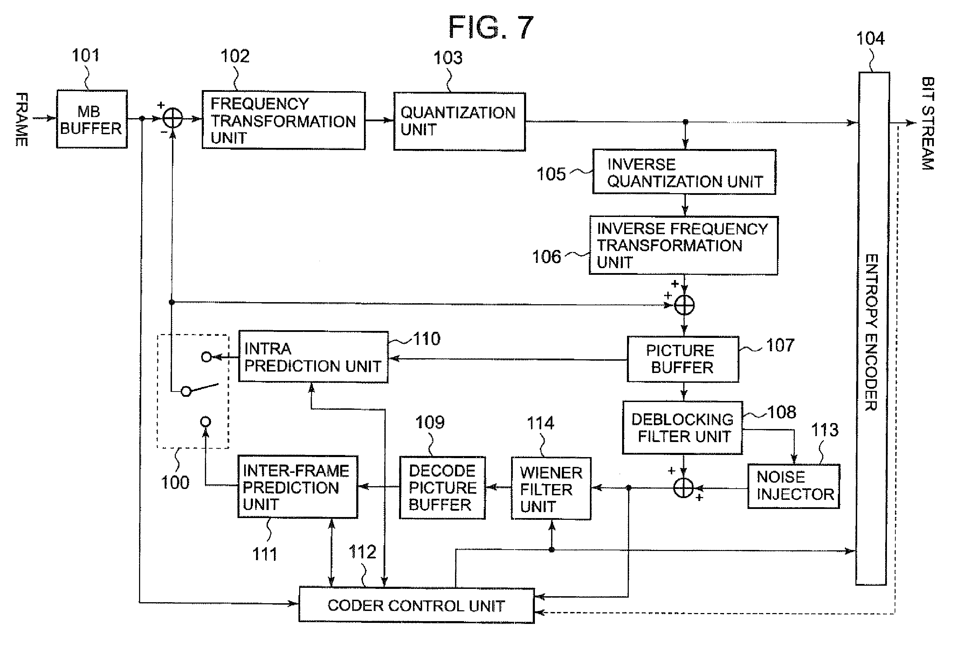

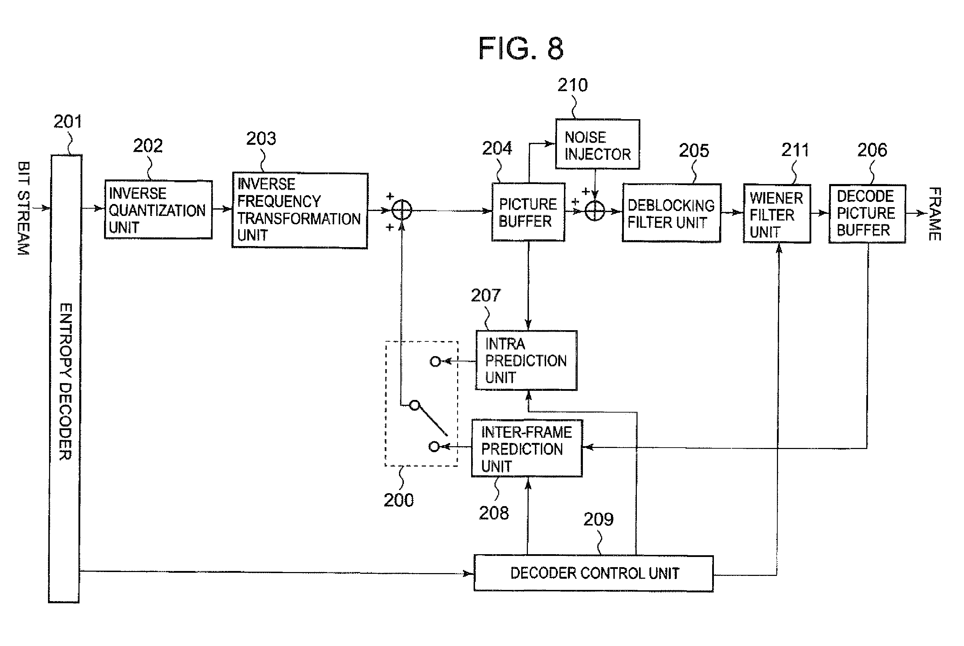

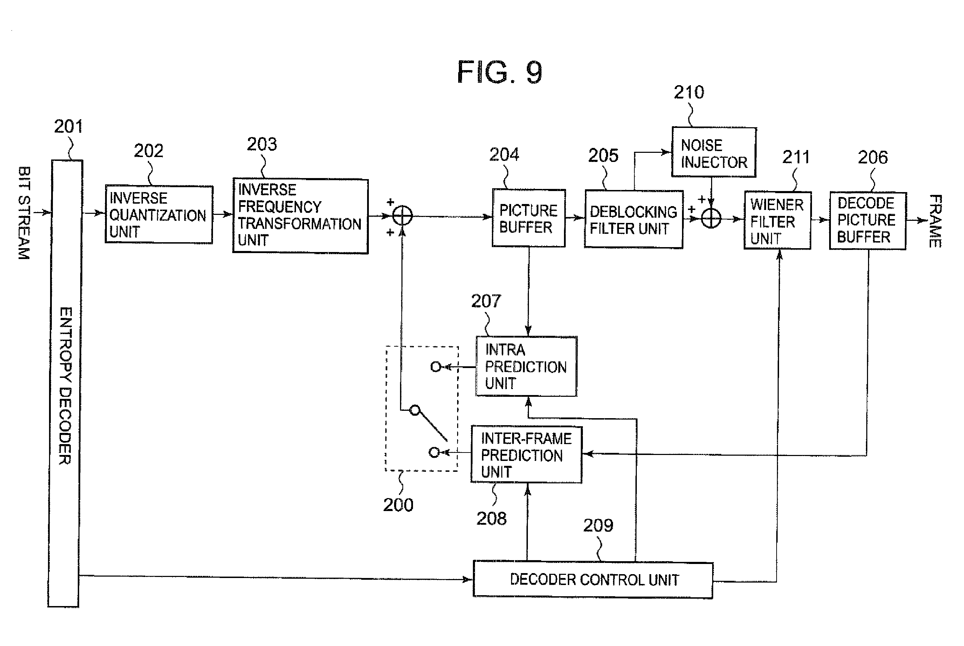

When a noise injector for determining a pseudorandom noise injecting position based on a magnitude of the variation of pixel values is applied to the video encoding device and the video decoding device according to the first to fourth embodiments, the structure of the video encoding device is as shown in Fig. 6 or Fig. 7 and the structure of the video decoding device is as shown in Fig. 8 or Fig. 9.

That is, as shown in Fig. 6 and Fig. 7, in the video encoding device, the noise injector 113 inputs a reference image picture (block-distortion-removed image picture) stored in the picture buffer 107 and calculates the variation of pixel values in a reconstructed image. As shown in Fig. 8 and Fig. 9, in the video decoding device, the noise injector 210 inputs a reference image picture (block-distortion-removed image picture) stored in the picture buffer 204 and calculates the variation of pixel values in a reconstructed image.

While the video encoding device shown in Fig. 6 and Fig. 7 uses the variation of pixel values of a reconstructed image before removal of a block distortion, the video encoding device and the video decoding device shown in Fig. 8 and Fig. 9 use the variation of pixel values in a reconstructed image after removal of a block distortion. The video encoding device and the video decoding device shown in Fig. 8 and Fig. 9 can use the variation of the pixel values of the reconstructed image before removal of a block distortion, but the variation of the pixel values is influenced by a block distortion.

An image metric for detecting a flat image area, such as a dispersion of peripheral pixel values or a difference between the maximum pixel value and the minimum pixel value of the peripheral pixel values may be used instead of the variation of the pixel values expressed by Formula (8).

Other embodiment using extension information may be considered.

In the embodiments in which the noise injector calculates the variation of pixel values of a reconstructed image and determines a pseudorandom noise injecting position based on a magnitude of the calculated variation of the pixel values, a calculation efficiency for video encoding and video decoding depending on the calculated variation can be lowered.

There may be considered an embodiment in which the variation of pixel values in a reconstructed image within a block or on a block edge is estimated from extension information associated with a reconstructed image block and a pseudorandom noise injecting position or pseudorandom noise injecting candidate position is determined based on a magnitude of the estimated variation of the pixel values. The pseudorandom noise injecting candidate position is assumed as a pixel position which is determined as a pseudorandom noise injecting position based on the calculated variation of the pixel values in the reconstructed image.

For example, the noise injector estimates the variation by use of the information on the prediction signal, the information on the base size of the integer DCT and the significant alternate current (AC) quantization index as the extension information associated with the image of the reconstructed image picture. With the structure, contour and stair-step artifacts can be efficiently reduced without comparing all the pixel values in the reconstructed image and calculating the variation of the pixel values.

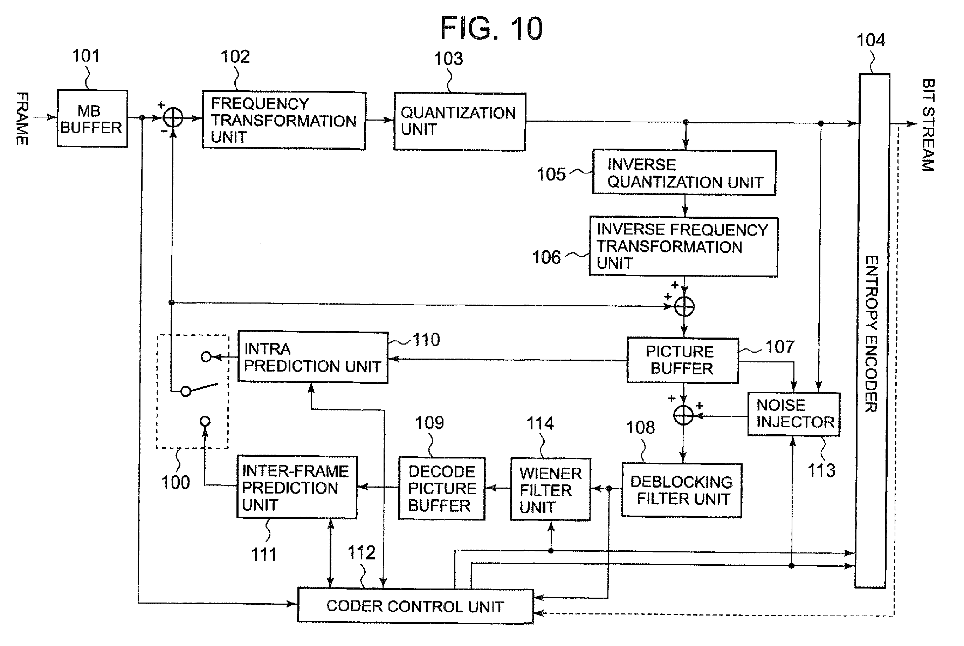

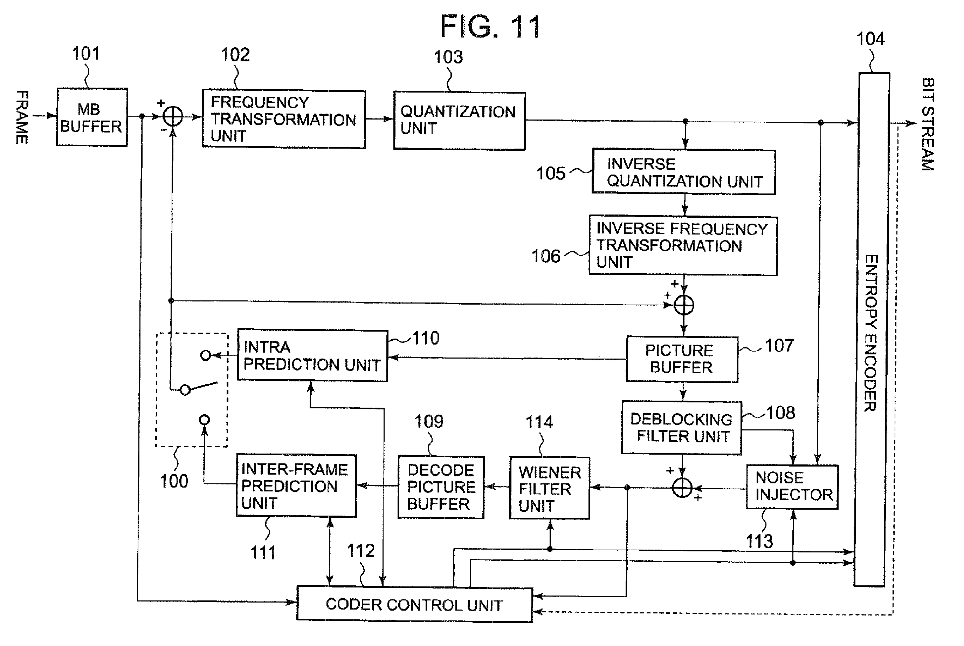

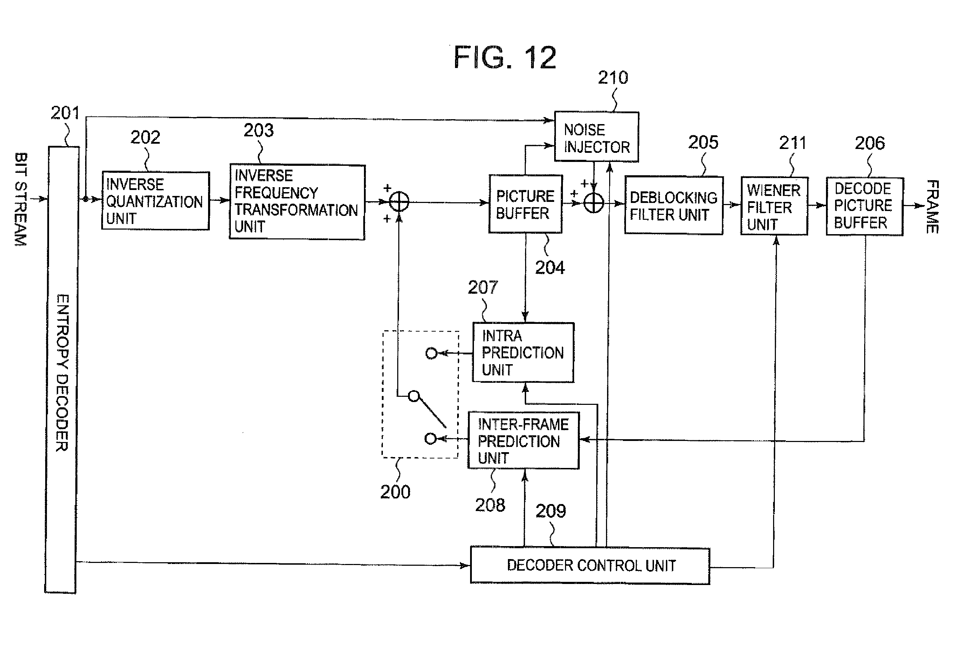

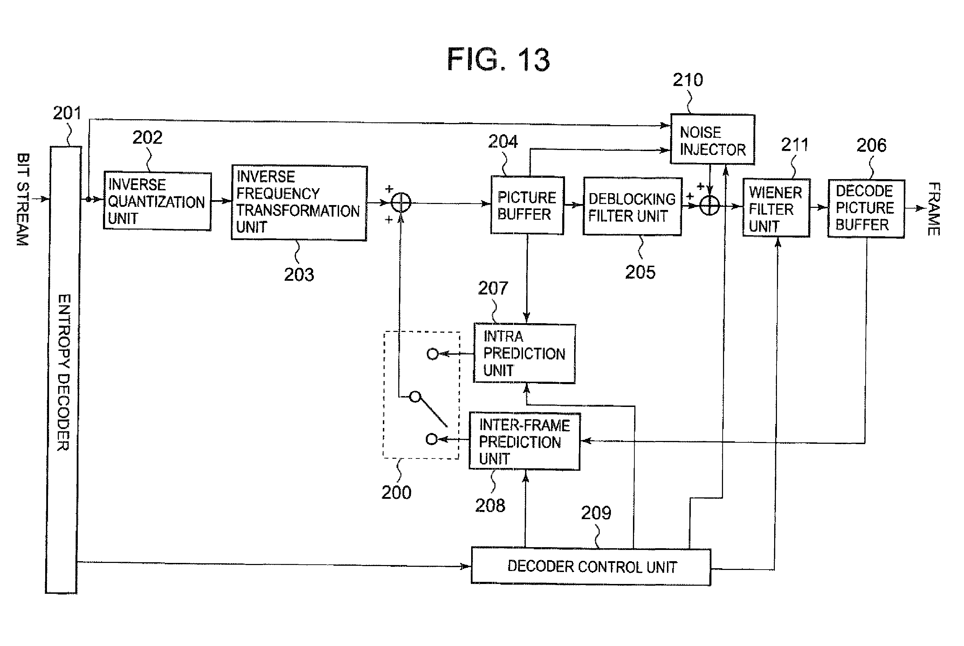

When the noise injector for estimating the variation is applied to the video encoding device and the video decoding device according to the first to fourth embodiments, the structure of the video encoding device is as shown in Fig. 10 or Fig. 11 and the structure of the video decoding device is as shown in Fig. 12 or Fig. 13.

That is, as shown in Fig. 10 and Fig. 11, in the video encoding device, the noise injector 113 inputs a reference image picture (block-distortion-removed image picture) stored in the picture buffer 107, inputs the information on the selected prediction signal, the base size of the integer DCT and the quantization index, which are to be input into the entropy encoder 104, and estimates the variation of pixel values in a reconstructed image. As shown in Fig. 12 and Fig. 13, in the video decoding device, the noise injector 210 inputs a reference image picture (block-distortion-removed image picture) stored in the picture buffer 204, entropy-decodes a bit stream output from the entropy decoder 201, inputs the information on the prediction signal of the MB to be decoded, the base size of the integer DCT and the quantization index, and estimates the variation of pixel values in a reconstructed image.

The video encoding device and the video decoding device can estimate a reconstructed image meeting any one of a prediction type for a flat prediction signal, a large base size of then integer DCT, a small number of significant AC quantization indexes to have a small variation of pixel values, and can determine a pseudorandom noise injecting position or pseudorandom noise injecting candidate position based on the estimation result.

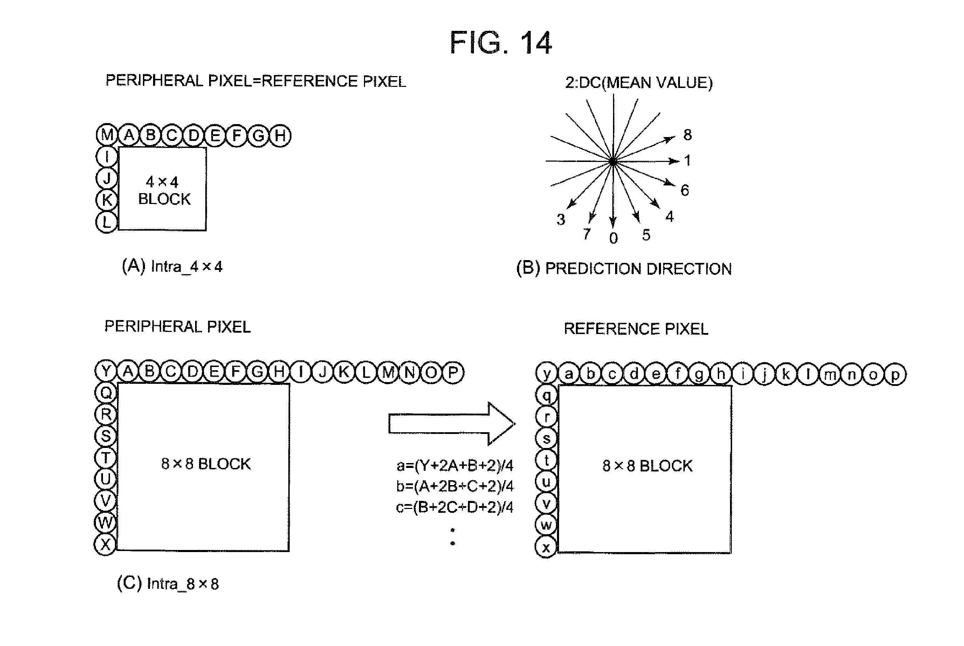

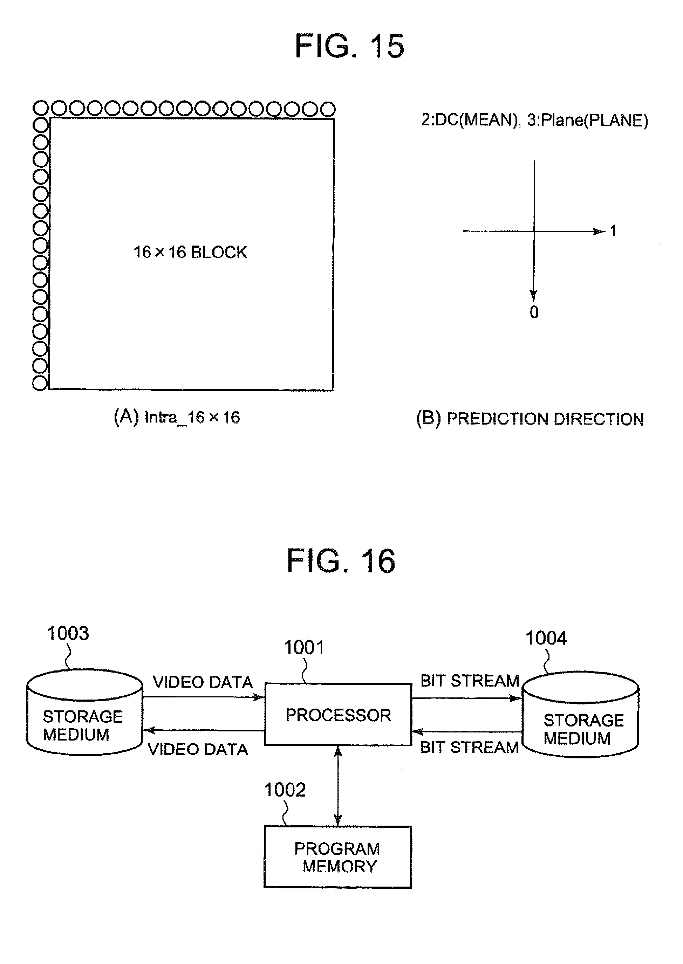

The prediction types for a flat prediction signal include DC (see "2" in Fig. 14 and Fig. 15(B)), horizontal (see "1" in Fig. 14 and Fig. 15(B)) and vertical (see "0" in Fig. 14 and Fig. 15(B)) intra predictions.

The estimation that the variation of pixel values in a reconstructed image for the DC, horizontal and vertical intra predictions is small is based on the fact that a significant conversion coefficient is generated only for a specific component for Hadamard transform of a prediction signal in the DC, horizontal and vertical intra prediction directions as described in Non-Patent literature 6. Specifically, a significant conversion coefficient only for the DC, a significant conversion coefficient only for the DC and the vertical component AC, and a significant conversion coefficient only for the DC and the horizontal component AC are for the DC intra prediction direction, the horizontal intra prediction direction and the vertical intra prediction direction, respectively.

That a significant conversion coefficient occurs only for a specific component indicates that the variation of the image is zero (that is, the prediction signal is flat) in the DC intra prediction direction, the variation of the image in the horizontal direction is zero (that is, the prediction signal is flat in the horizontal direction) in the horizontal intra prediction direction, and the variation of the image in the vertical direction is zero (that is, the prediction signal is flat in the vertical direction) in the vertical intra prediction direction.

Since a relationship between a significant conversion coefficient only for a specific component and a flat prediction signal is established not only for Hadamard transform but also for the integer DCT, the variation of pixel values in a reconstructed image based on the DC, horizontal and vertical intra predictions can be estimated to be small.

The estimation that the variation of pixel values in a reconstructed image based on a large base size of the integer DCT is small is based on the fact that as an input MB is flatter, that is, as the variation is smaller, a larger block size is selected.

The estimation that the variation of pixel values in a reconstructed image having a pattern with a small number of significant AC quantization indexes is small is based on the fact that AC in the integer DCT corresponds to the variation of the image. Since the variation is larger in a high frequency component AC than in a low frequency component AC, the variation of the pixel values in the reconstructed image having a pattern with a small number of AC quantization indexes in the significant high frequency component may be estimated to be small (the pattern with a small number of significant AC quantization indexes may use a pattern in which a significant AC quantization index is present only for a predetermined low frequency component or a pattern in which significant AC quantization indexes are roughly present for all the frequency components).

As is clear from the above, the variation of pixel values of a reconstructed image can be estimated and a pseudorandom noise injecting position or pseudorandom noise injecting candidate position can be determined based on any combination or all of a prediction type for a flat prediction signal, a large base size of the integer DCT and a small number of significant AC quantization indexes.

The noise injector may determine a pseudorandom noise injecting candidate position based on extension information on a reconstructed image block and may determine a pseudorandom noise injecting candidate position based on the variation of an image of a reconstructed image picture for a injecting candidate position.

There may be also considered an embodiment in which quantization parameters are utilized for the extension information and a pseudorandom noise is adjusted to be small for the reconstructed image having a small quantization step size so as not to inject a pseudorandom noise. With the structure, an adverse effect due to a injected pseudorandom noise can be reduced in high bit rate encoding with a small quantization step size.

There may be considered other embodiment in which a Wiener filter with an offset coefficient is used.

That is, in the Wiener filter according to each of the embodiments, there is considered an implementation for using a Wiener filter with an offset coefficient in order to correct a direct current (DC) gain.

A mean square error $E[e^2]$ and Wiener-hops equations for a model with offset are expressed in Formula (10) and Formula (11). $E_x(m)$ in Formula (11) is expressed in Formula (12).

[Equation 5]

$$E[e^2] = \sum_{\tau}^{n-1} \sum_{\theta}^{n-1} h(\tau) h(\theta) R_{XX}(\tau - \theta) + \text{offset}^2 - E[s^2]$$

$$+ 2 \cdot \text{offset} \sum_{\tau}^{n-1} h(\tau) E_X(\tau) - 2 \cdot \text{offset} E[s] - 2 \sum_{\tau}^{n-1} h(\tau) R_{SX}(\tau) \qquad \cdots (10)$$

[Equation 6]

$$\begin{bmatrix} R_{SX}(0) \\ R_{SX}(1) \\ \vdots \\ R_{SX}(n-1) \\ E[s] \end{bmatrix} = \begin{bmatrix} R_{XX}(0) & R_{XX}(1) & \cdots & R_{XX}(n-1) & E_X(0) \\ R_{XX}(1) & R_{XX}(0) & \cdots & R_{XX}(n-2) & E_X(1) \\ \vdots & \vdots & \ddots & \vdots & \vdots \\ R_{XX}(n-1) & R_{XX}(n-2) & \cdots & R_{XX}(0) & E_X(n-1) \\ E_X(0) & E_X(1) & \cdots & E_X(n-1) & 1 \end{bmatrix} \begin{bmatrix} h(0) \\ h(0) \\ \vdots \\ h(n-1) \\ \text{offset} \end{bmatrix} \qquad \cdots (11)$$

[Equation 7]

$$E_x(m) = \frac{1}{N} \sum_{n=0}^{N-1} x(n+m) \qquad \cdots (12)$$

An effect of correcting an offset of a DC gain due to a injected pseudorandom noise can be obtained by use of the Wiener filter with the filter coefficients of h($\tau$) 0$\leq\tau\leq$n-1} and offset, based on the Wiener-hops equations expressed in Formula (11). There may be also considered an embodiment in which a random noise having an average value of offset (a random noise with uniform distribution, Gaussian distribution or Laplace distribution) is used instead of offset obtained by Formula (11) as an offset value for all pixel positions. In the embodiment using a random noise, even when a noise injector does not inject a pseudorandom noise into an image, a Wiener filter can inject a pseudorandom noise instead.

Each of the embodiments may be configured in hardware but may be realized by a computer program.

An information processing system shown in Fig. 16 includes a processor 1001, a program memory 1002, a storage medium 1003 for storing video data therein, and a storage medium 1004 for storing bit streams therein. The storage medium 1003 and the storage medium 1004 may be separate storage mediums or may be one storage area made of the same storage medium. A magnetic storage medium such as hard disc may be used for the storage mediums.

In the information processing system shown in Fig. 16, the program memory 1002 stores therein programs for realizing the functions of the respective blocks (except for the buffer blocks) shown in Figs. 1 to 5 (except for Fig. 2), Figs. 6 to 9 and Figs. 10 to 13. The processor 1001 performs the processing according to the programs stored in the program memory 1002 to realize the functions of the video encoding device or the video decoding device shown in Figs. 1 to 5 (except for Fig. 2), Figs. 6 to 9 and Figs. 10 to 13.

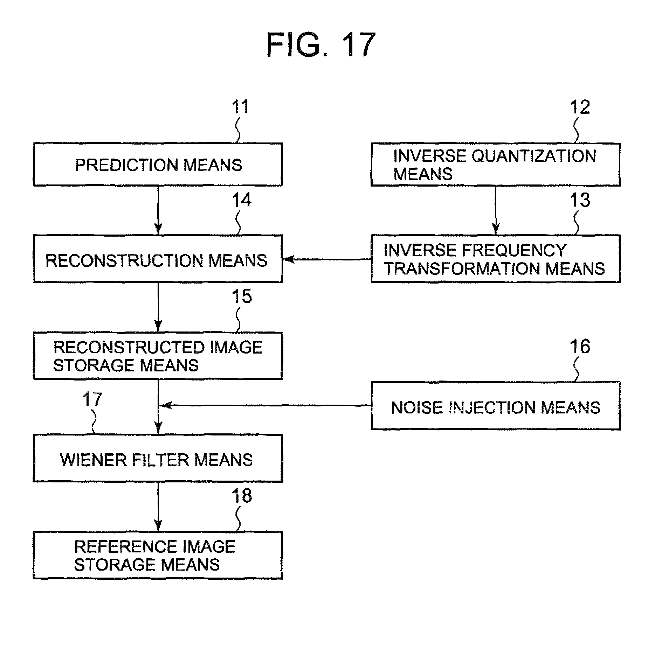

Fig. 17 is a block diagram showing a main structure of a video encoding device according to the present invention. As shown in Fig. 17, the video encoding device according to the present invention includes a prediction means 11 for calculating an intra prediction signal or an inter-frame prediction signal for an image block, an inverse quantization means 12 for inversely quantizing a quantization index of the image block to obtain a quantization representative value, an inverse frequency transformation means 13 for inversely transforming the quantization representative value obtained by the inverse quantization means 12 to obtain a reconstructed predictive error image block, a reconstruction means 14 for adding an intra prediction signal or an inter-frame prediction signal to the reconstructed predictive error image block obtained by the inverse frequency transformation means 13 to obtain a reconstructed image block, a reconstructed image storage means 15 for storing the reconstructed image block obtained by the reconstruction means 14 as a reconstructed image picture, a noise inject means 16 for injecting a pseudorandom noise into the reconstructed image picture, a Wiener filter means 17 for applying a Wiener filter to the reconstructed image picture with a pseudorandom noise injected, and a reference image storage means 18 for storing the reconstructed image picture to which the Wiener filter is applied, as a reference image picture for inter-frame prediction.

In each of the embodiments, there is also disclosed a video encoding device in which a noise inject means calculates the variation of pixel values in a reconstructed image and determines a pseudorandom noise injecting position based on a magnitude of the calculated variation of the pixel values.

There is also disclosed a video encoding device including a means for estimating the variation of pixel values in a reconstructed image within a block or on a block edge based on extension information associated with a reconstructed image block, and for determining a pseudorandom noise injecting candidate position based on a magnitude of the estimated variation of the pixel values.

In each of the embodiments, there is also disclosed a video encoding device including a reset means (which is realized by the coder control unit 112, for example) for resetting the noise inject means in a predetermined unit of video encoding.

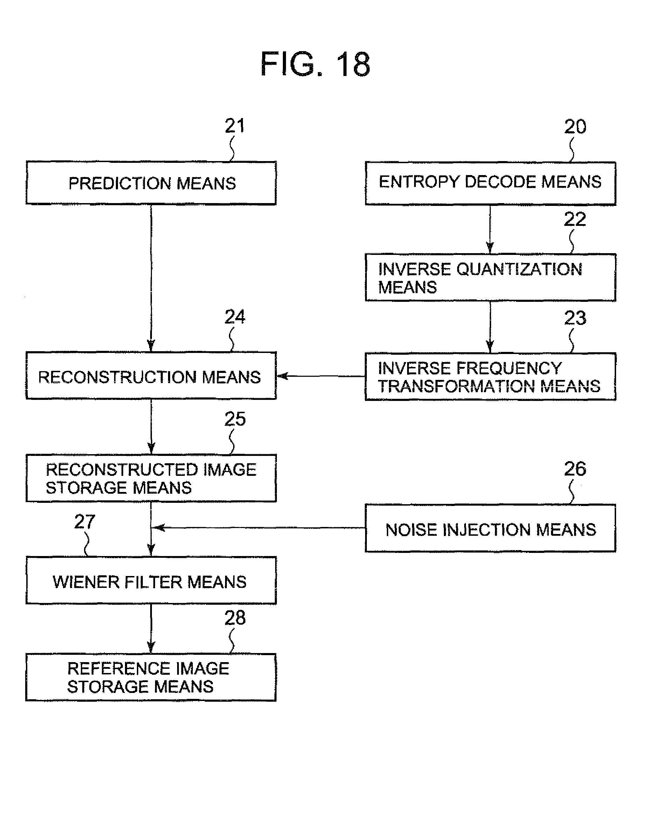

Fig. 18 is a block diagram showing a main structure of a video decoding device according to the present invention. As shown in Fig. 18, the video decoding device according to the present invention includes an entropy decode means 20 for entropy-decoding a bit string to calculate a quantization index, a prediction means 21 for calculating an intra prediction signal or an inter-frame prediction signal for an image block, an inverse quantization means 22 for inversely quantizing a quantization index to obtain a quantization representative value, an inverse frequency transformation means 23 for inversely transforming the quantization representative value obtained by the inverse quantization means 22 to obtain a reconstructed predictive error image block, a reconstruction means 24 for adding an intra prediction signal or an inter-frame prediction signal to the reconstructed predictive error image block obtained by the inverse frequency transformation means 23 to obtain a reconstructed image block, a reconstructed image storage means 25 for storing the reconstructed image block obtained by the reconstruction means 24 as a reconstructed image picture, a noise inject means 26 for injecting a pseudorandom noise into the reconstructed image picture, a Wiener filter means 27 for applying a Wiener filter to the reconstructed image picture with a pseudorandom noise injected, and a reference image means 28 for storing the reconstructed image picture to which the Wiener filter is applied, as a reference image picture for inter-frame prediction.

In each of the embodiments, there is also disclosed a video decoding device in which a noise inject means calculates the variation of pixel values in a reconstructed image and determines a pseudorandom noise injecting position based on a magnitude of the calculated variation of the pixel values.

There is also disclosed a video decoding device including a means for estimating the variation of pixel values in a reconstructed image within a block or on a block edge based on extension information associated with a reconstructed image block and for determining a pseudorandom noise injecting candidate position based on a magnitude of the estimated variation of the pixel values.

In each of the embodiments, there is also disclosed a video decoding device including a reset means (which is realized by the decoder control unit 209, for example) for resetting the noise inject means in a predetermined unit of video decoding.

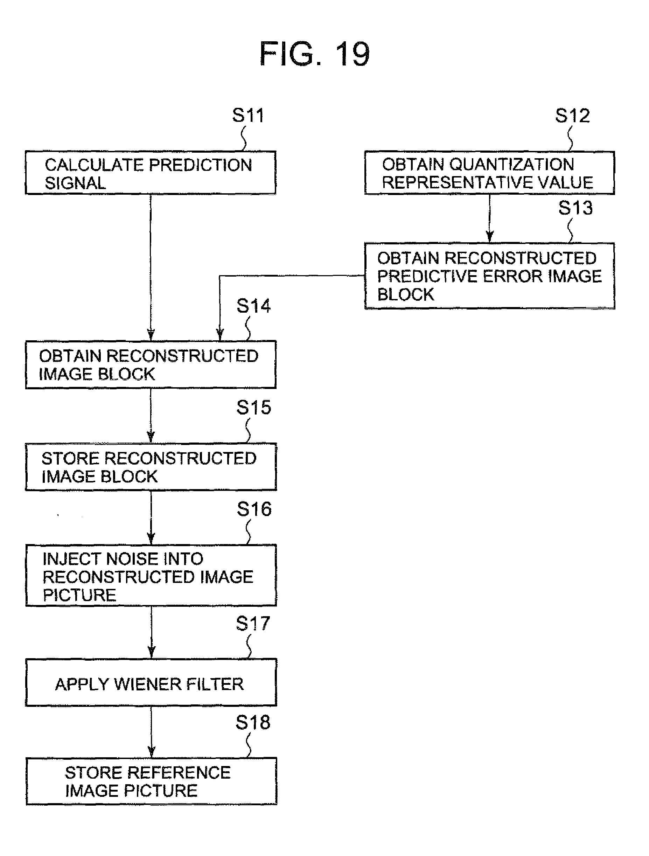

Fig. 19 is a flowchart showing main steps of a video encoding method according to the present invention. As shown in Fig. 19, in the video encoding method according to the present invention, an intra prediction signal or an inter-frame prediction signal for an image block is calculated (step S11), a quantization index of the image block is inversely quantized to obtain a quantization representative value (step S12), the obtained quantization representative value is inversely transformed to obtain a reconstructed predictive error image block (step S13), an intra prediction signal or an inter-frame prediction signal is added to the reconstructed predictive error image block to obtain a reconstructed image block (step S14), the obtained reconstructed image block is stored as a reconstructed image picture in a reconstructed image storage means (step S15), a pseudorandom noise is injected into the reconstructed image picture (step S16), a Wiener filter is applied to the reconstructed image picture with a pseudorandom noise injected (step S17), and the reconstructed image picture to which the Wiener filter is applied is stored as a reference image picture for inter-frame prediction in a reference image storage means (step S18).

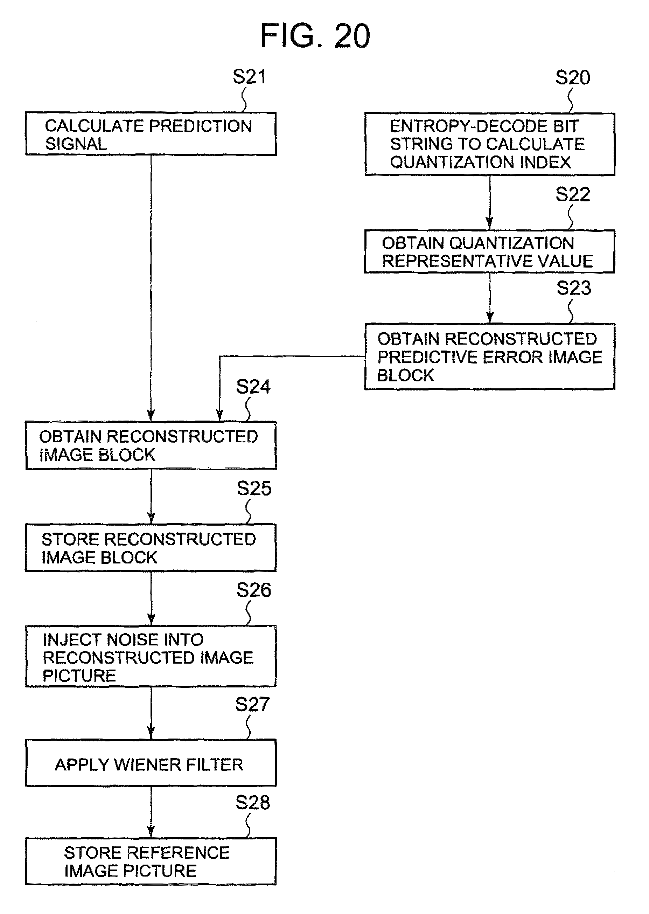

Fig. 20 is a flowchart showing main steps of a video decoding method according to the present invention. As shown in Fig. 20, in the video decoding method according to the present invention, a bit string is entropy-decoded to obtain a quantization index (step S20), an intra prediction signal or an inter-frame prediction signal for an image block is calculated (step S21), the quantization index is inversely quantized to obtain a quantization representative value (step S22), the obtained quantization representative value is inversely transformed to obtain a reconstructed predictive error image block (step S23), an intra prediction signal or an inter-frame prediction signal is added to the reconstructed predictive error image block to obtain a reconstructed image block (step S24), the reconstructed image block obtained by a reconstruction means is stored as a reconstructed image picture in a reconstructed image storage means (step S25), a pseudorandom noise is injected into the reconstructed image picture (step S26), a Wiener filter is applied to the reconstructed image picture with a pseudorandom noise injected (step S27), and the reconstructed image picture to which the Wiener filter is applied is stored as a reference image picture for inter-frame prediction in a reference image means (step S28).

The present invention has been described above with reference to the embodiments and the examples, but the present invention is not limited to the embodiments and the examples. The structure and details of the present invention can be variously modified to be understood by those skilled in the art within the scope of the present invention.

The present application claims the priority based on Japanese Patent Application No. 2009-272179 filed on November 30, 2009, the disclosure of which is all incorporated herein.

Reference Signs List

11: Prediction means
12: Inverse quantization means
13: Inverse frequency transformation means
14: Reconstruction means
15: Reconstructed image storage means
16: Noise inject means
17: Wiener filter means
18: Reference image storage means
20: Entropy decode means

21: Prediction means
22: Inverse quantization means
23: Inverse frequency transformation means
24: Reconstruction means
25: Reconstructed image storage means
26: Noise inject means
27: Wiener filter means
28: Reference image storage means
100: Switch
101: MB buffer
102: Frequency transformation unit
103: Quantization unit
104: Entropy encoder
105: Inverse quantization unit
106: Inverse frequency transformation unit
107: Picture buffer
108: Deblocking filter unit
109: Decode picture buffer
110: Intra prediction unit
111: Inter-frame prediction unit
112: Coder control unit
113: Noise injector
114: Wiener filter unit
200: Switch
201: Entropy decode unit
202: Inverse quantization unit
203: Inverse frequency transformation unit
204: Picture buffer
205: Deblocking filter unit
206: Decode picture buffer
207: Intra prediction unit
208: Inter-frame prediction unit
209: Decode control unit
210: Noise injector
211: Wiener filter unit
1001: Processor
1002: Program memory
1003: Storage medium
1004: Storage medium

**Claims**

1. A video encoding device comprising:

a prediction means for calculating an intra prediction signal or an inter-frame prediction signal for an image block;
an inverse quantization means for inversely quantizing a quantization index of the image block to obtain a quantization representative value;
an inverse frequency transformation means for inversely transforming the quantization representative value obtained by the inverse quantization means to obtain a reconstructed predictive error image block;
a reconstruction means for adding an intra prediction signal or an inter-frame prediction signal to the reconstructed predictive error image block obtained by the inverse frequency transformation means to obtain a reconstructed image block;
a reconstructed image storage means for storing therein the reconstructed image block obtained by the reconstruction means as a reconstructed image picture;
a noise inject means for injecting a pseudorandom noise into the reconstructed image picture;
a Wiener filter means for applying a Wiener filter to the reconstructed image picture with a pseudorandom noise injected; and

a reference image storage means for storing therein the reconstructed image picture to which the Wiener filter is applied as a reference image picture for inter-frame prediction.

2. The video encoding device according to claim 1, further comprising:

a predictive error calculation means for reducing the intra prediction signal or the inter-frame prediction signal from the image block to obtain a predictive error image block;

a frequency transformation means for transforming the predictive error image block obtained by the predictive error calculation means to obtain a conversion coefficient;

a quantization index calculation means for quantizing the conversion coefficient obtained by the frequency transformation means to obtain a quantization index; and

an entropy encode means for entropy-encoding the quantization index obtained by the quantization index calculation means to output a bit string,

wherein the inverse quantization means inversely quantizes the quantization index obtained by the quantization index calculation means.

3. The video encoding device according to claim 1, further comprising:

a predictive error calculation means for reducing the intra prediction signal or the inter-frame prediction signal from the image block to obtain a predictive error image block;

a frequency transformation means for transforming the predictive error image block obtained by the predictive error calculation means to obtain a conversion coefficient;

a quantization index calculation means for quantizing the conversion coefficient obtained by the frequency transformation means to calculate a quantization index;

an entropy encode means for entropy-encoding the quantization index obtained by the quantization index calculation means to output a bit string;

wherein the inverse quantization means inversely quantizes the quantization index obtained by the quantization index calculation means;

the video encoding device further comprising a block distortion removal means for removing a block distortion of a reconstructed image; and

wherein the noise inject means injects a pseudorandom noise into the reconstructed image picture with a block distortion removed.

4. The video encoding device according to any one of claims 1 to 3, wherein the noise inject means determines a pseudorandom noise injecting position based on the variation of an image of a reconstructed image picture.

5. The video encoding device according to any one of claims 1 to 3, wherein the noise inject means determines a pseudorandom noise injecting position based on extension information of a reconstructed image block.

6. The video encoding device according to any one of claims 1 to 3, wherein the noise inject means determines a pseudorandom noise injecting candidate position based on extension information of a reconstructed image block and determines a pseudorandom noise injecting candidate position based on the variation of an image of a reconstructed image picture for a injecting candidate position.

7. The video encoding device according to any one of claims 1 to 6, further comprising a reset means for resetting the noise inject means in a predetermined unit of video encoding.

8. The video encoding device according to any one of claims 1 to 7, wherein the noise inject means injects a pseudorandom noise adjusted according to a quantization step size.

9. A video decoding device comprising:

an entropy decode means for entropy-decoding a bit string to calculate a quantization index;

a prediction means for calculating an intra prediction signal or an inter-frame prediction signal for an image block;

an inverse quantization means for inversely quantizing the quantization index to obtain a quantization representative value;

an inverse frequency transformation means for inversely transforming the quantization representative value obtained by the inverse quantization means to obtain a reconstructed predictive error image block;

a reconstruction means for adding an intra prediction signal or an inter-frame prediction signal to the reconstructed predictive error image block obtained by the inverse frequency transformation means to obtain a reconstructed image block;

a reconstructed image storage means for storing the reconstructed image block obtained by the reconstruction means as a reconstructed image picture;

a noise inject means for injecting a pseudorandom noise into the reconstructed image picture;

a Wiener filter means for applying a Wiener filter to the reconstructed image picture with a pseudorandom noise injected; and

a reference image storage means for storing the reconstructed image picture to which the Wiener filter is applied as a reference image picture for inter-frame prediction.

**10.** The video decoding device according to claim 9, further comprising:

a block distortion removal means for removing a block distortion of a reconstructed image picture,
wherein the noise inject means injects a pseudorandom noise into the reconstructed image picture with a block distortion removed.

**11.** The video decoding device according to claim 9 or 10, wherein the noise inject means determines a pseudorandom noise injecting position based on the variation of an image of a reconstructed image picture.

**12.** The video decoding device according to claim 9 or 10, wherein the noise inject means determines a pseudorandom noise injecting position based on extension information of a reconstructed image block.

**13.** The video decoding device according to claim 9 or 10, wherein the noise inject means determines a pseudorandom noise injecting candidate position based on extension information of a reconstructed image block and determines a pseudorandom noise injecting candidate position based on the variation of an image of a reconstructed image picture for a injecting candidate position.

**14.** The video decoding device according to any one of claims 9 to 13, further comprising a reset means for resetting the noise inject means in a predetermined unit of video decoding.

**15.** The video decoding device according to any one of claims 9 to 14, wherein the noise inject means injects a pseudorandom noise adjusted according to a quantization step size.

**16.** A video encoding method comprising:

calculating an intra prediction signal or an inter-frame prediction signal for an image block;
inversely quantizing a quantization index of the image block to obtain a quantization representative value;
inversely transforming the obtained quantization representative value to obtain a reconstructed predictive error image block;
adding an intra prediction signal or an inter-frame prediction signal to the reconstructed predictive error image block to obtain a reconstructed image block;
storing the obtained reconstructed image block as a reconstructed image picture in a reconstructed image storage means;
injecting a pseudorandom noise into the reconstructed image picture;
applying a Wiener filter to the reconstructed image picture with a pseudorandom noise injected; and
storing the reconstructed image picture to which the Wiener filter is applied as a reference image picture for inter-frame prediction in a reference image storage means.

**17.** The video encoding method according to claim 16, further comprising:

reducing the intra prediction signal or the inter-frame prediction signal from the image block to obtain a predictive error image block;
transforming the predictive error image block to obtain a conversion coefficient;
performing a quantization index calculation processing of quantizing the conversion coefficient tao obtain a quantization index;
entropy-encoding the quantization index obtained by the quantization index calculation processing to output a bit string; and

inversely quantizing the quantization index obtained by the quantization index calculation processing.

18. The video encoding method according to claim 16, further comprising:

reducing the intra prediction signal or the inter-frame prediction signal from the image block to obtain a predictive error image block;
transforming the predictive error image block to obtain a conversion coefficient;
performing a quantization index calculation processing of quantizing the conversion coefficient to calculate a quantization index;
entropy-encoding the quantization index obtained by the quantization index calculation processing to output a bit string;
inversely quantizing the quantization index obtained by the quantization index calculation processing;
removing a block distortion of a reconstructed image block; and
injecting a pseudorandom noise into the reconstructed image picture with a block distortion removed.

19. The video encoding method according to any one of claims 16 to 18, further comprising:

determining a pseudorandom noise injecting position based on the variation of an image of a reconstructed image picture.

20. The video encoding method according to any one of claims 16 to 18, further comprising:

determining a pseudorandom noise injecting position based on extension information of a reconstructed image block.

21. The video encoding method according to any one of claims 16 to 18, further comprising:

determining a pseudorandom noise injecting candidate position based on extension information of a reconstructed image block; and
determining a pseudorandom noise injecting candidate position based on the variation of an image of a reconstructed image picture for a injecting candidate position.

22. The video encoding method according to any one of claims 16 to 18, further comprising:

generating, as a pseudorandom noise, a pseudorandom noise which is reset in a predetermined unit of video encoding.

23. The video encoding method according to any one of claims 16 to 22, further comprising:

injecting a pseudorandom noise adjusted according to a quantization step size.

24. A video decoding method comprising:

entropy-decoding a bit string to calculate a quantization index;
calculating an intra prediction signal or an inter-frame prediction signal for an image block;
inversely quantizing the quantization index to obtain a quantization representative value;
inversely transforming the obtained quantization representative value to obtain a reconstructed predictive error image block;
adding an intra prediction signal or an inter-frame prediction signal to the reconstructed predictive error image block to obtain a reconstructed image block;
storing the obtained reconstructed image block as a reconstructed image picture in a reconstructed image storage means;
injecting a pseudorandom noise into the reconstructed image picture;
applying a Wiener filter to the reconstructed image picture with a pseudorandom noise injected; and
storing the reconstructed image picture to which the Wiener filter is applied as a reference image picture for inter-frame prediction in a reference image storage means.

25. The video decoding method according to claim 24, further comprising:

removing a block distortion of a reconstructed image picture; and
injecting a pseudorandom noise into the reconstructed image picture with a block distortion removed.

26. The video decoding device according to claim 24 or 25, further comprising:

determining a pseudorandom noise injecting position based on the variation of an image of a reconstructed image picture.

27. The video decoding device according to claim 24 or 25, further comprising:

determining a pseudorandom noise injecting position based on extension information of a reconstructed image block.

28. The video decoding device according to claim 24 or 25, further comprising:

determining a pseudorandom noise injecting candidate position based on extension information of a reconstructed image block, and determining a pseudorandom noise injecting candidate position based on the variation of an image of a reconstructed image picture for a injecting candidate position.

29. The video decoding method according to any one of claims 24 to 28, further comprising:

generating, as a pseudorandom noise, a pseudorandom noise which is reset in a predetermined unit of video decoding.

30. The video decoding method according to any one of claims 24 to 29, further comprising:

injecting a pseudorandom noise adjusted according to a quantization step size.

31. A video encoding program for causing a computer to execute:

a processing of calculating an intra prediction signal or an inter-frame prediction signal for an image block;
a processing of inversely quantizing a quantization index of the image block to obtain a quantization representative value;
a processing of inversely transforming the obtained quantization representative value to obtain a reconstructed predictive error image block;
a processing of adding an intra prediction signal or an inter-frame prediction signal to the reconstructed predictive error image block to obtain a reconstructed image block;
a processing of storing the obtained reconstructed image block as a reconstructed image picture in a reconstructed image storage means;
a processing of injecting a pseudorandom noise into the reconstructed image picture;
a processing of applying a Wiener filter to the reconstructed image picture with a pseudorandom noise injected; and
a processing of storing the reconstructed image picture to which the Wiener filter is applied as a reference image picture for inter-frame prediction in a reference image storage means.

32. The video encoding program according to claim 31, for causing a computer to execute:

a processing of reducing the intra prediction signal or the inter-frame prediction signal from the image block to obtain a predictive error image block;
a processing of transforming the predictive error image block to obtain a conversion coefficient;
a quantization index calculation processing of quantization conversion coefficient to obtain a quantization index;
a quantization processing of entropy-encoding the quantization index obtained by the quantization index calculation processing to output a bit string; and
a processing of inversely quantizing the quantization index obtained by the quantization index calculation processing.

33. The video encoding program according to claim 31, for causing a computer to execute:

a processing of reducing the intra prediction signal or the inter-frame prediction signal from the image block to obtain a predictive error image block;

a processing of transforming the predictive error image block to obtain a conversion coefficient;

a quantization index calculation processing of quantizing the conversion coefficient to calculate a quantization index;

an entropy encode processing of entropy-encoding the quantization index obtained by the quantization index calculation processing to output a bit string;

a processing of inversely quantizing the quantization index obtained by the quantization index calculation processing;

a block distortion removal processing of removing a block distortion of a reconstructed image block; and

a processing of injecting a pseudorandom noise into the reconstructed image picture with a block distortion removed.

34. The video encoding program according to any one of claims 31 to 33, for causing a computer to execute a processing of determining a pseudorandom noise injecting position based on the variation of an image of a reconstructed image picture.

35. The video encoding program according to any one of claims 31 to 33, for causing a computer to execute a processing of determining a pseudorandom noise injecting position based on extension information of a reconstructed image block.

36. The video encoding program according to any one of claims 31 to 33, for causing a computer to execute a processing of determining a pseudorandom noise injecting candidate position based on extension information of a reconstructed image block and determining a pseudorandom noise injecting candidate position based on the variation of an image of a reconstructed image picture for a injecting candidate position.

37. The video encoding program according to any one of claims 31 to 36, for causing a computer to generate, as a pseudorandom noise, a pseudorandom noise which is reset in a predetermined unit of video encoding.

38. The video encoding program according to any one of claims 31 to 37, for causing a computer to inject a pseudorandom noise adjusted according to a quantization step size.

39. A video decoding program for causing a computer to execute:

a processing of entropy-decoding a bit string to calculate a quantization index;

a processing of calculating an intra prediction signal or an inter-frame prediction signal for an image block;

a processing of inversely quantizing the quantization index to obtain a quantization representative value;

a processing of inversely transforming the obtained quantization representative value to obtain a reconstructed predictive error image block;

a processing of adding an intra prediction signal or an inter-frame prediction signal to the reconstructed predictive error image block to obtain a reconstructed image block;

a processing of storing the obtained reconstructed image block as a reconstructed image picture in a reconstructed image storage means;

a processing of injecting a pseudorandom noise into the reconstructed image picture;

a processing of applying a Wiener filter to the reconstructed image picture with a pseudorandom noise injected; and

a processing of storing the reconstructed image picture to which the Wiener filter is applied as a reference image picture for inter-frame prediction in a reference image storage means.

40. The video decoding program according to claim 39, for causing a computer to execute:

a processing of removing a block distortion of a reconstructed image picture; and

a processing of injecting a pseudorandom noise into the reconstructed image picture with a block distortion removed.

41. The video decoding program according to claim 39 or 40, for causing a computer to execute a processing of determining a pseudorandom noise injecting position based on the variation of an image of a reconstructed image picture.

**42.** The video decoding program according to claim 39 or 40, for causing a computer to execute a processing of determining a pseudorandom noise injecting position based on extension information of a reconstructed image block.

**43.** The video decoding program according to claim 39 or 40, for causing a computer to execute a processing of determining a pseudorandom noise injecting candidate position based on extension information of a reconstructed image block and determining a pseudorandom noise injecting candidate position based on the variation of an image of a reconstructed image picture for a injecting candidate position.

**44.** The video decoding program according to any one of claims 39 to 43, for causing a computer to generate, as a pseudorandom noise, a pseudorandom noise which is reset in a predetermined unit of video decoding.

**45.** The video decoding program according to any one of claims 39 to 44, for causing a computer to inject a pseudorandom noise adjusted according to a quantization step size.

FIG. 1

BIT STREAM

104 ENTROPY ENCODER

101 MB BUFFER

FRAME

102 FREQUENCY TRANSFORMATION UNIT

103 QUANTIZATION UNIT

105 INVERSE QUANTIZATION UNIT

106 INVERSE FREQUENCY TRANSFORMATION UNIT

107 PICTURE BUFFER

113 NOISE INJECTOR

108 DEBLOCKING FILTER UNIT

114 WIENER FILTER UNIT

109 DECODE PICTURE BUFFER

110 INTRA PREDICTION UNIT

111 INTER-FRAME PREDICTION UNIT

112 CODER CONTROL UNIT

100

# FIG. 2

RESET      RESET      RESET

t-1           t           t+1          TIME

(A) RESET PSEUDO NOISE GENERATOR PER FRAME

RESET

(B) RESET PSEUDO NOISE GENERATOR PER PLURAL MBs IN FRAME

# FIG. 3

EP 2 509 318 A1

FIG. 4

## FIG. 5

EP 2 509 318 A1

# FIG. 6

FRAME → MB BUFFER (101) → ⊕ → FREQUENCY TRANSFORMATION UNIT (102) → QUANTIZATION UNIT (103) → ENTROPY ENCODER (104) → BIT STREAM

INVERSE QUANTIZATION UNIT (105)

INVERSE FREQUENCY TRANSFORMATION UNIT (106)

PICTURE BUFFER (107)

INTRA PREDICTION UNIT (110)

NOISE INJECTOR (113)

INTER-FRAME PREDICTION UNIT (111)

DECODE PICTURE BUFFER (109)

WIENER FILTER UNIT (114)

DEBLOCKING FILTER UNIT (108)

CODER CONTROL UNIT (112)

100

EP 2 509 318 A1

# FIG. 7

EP 2 509 318 A1

FIG. 8

EP 2 509 318 A1

## FIG. 9

# FIG. 10

FIG. 11

BIT STREAM

# FIG. 12

EP 2 509 318 A1

# FIG. 13

EP 2 509 318 A1

# FIG. 14

PERIPHERAL PIXEL=REFERENCE PIXEL

2:DC(MEAN VALUE)

(A) Intra_4×4

(B) PREDICTION DIRECTION

PERIPHERAL PIXEL

REFERENCE PIXEL

$a=(Y+2A+B+2)/4$
$b=(A+2B+C+2)/4$
$c=(B+2C+D+2)/4$
⋮

(C) Intra_8×8

EP 2 509 318 A1

# FIG. 15

16 × 16 BLOCK

(A) Intra_16 × 16

2:DC(MEAN), 3:Plane(PLANE)

1

0

(B) PREDICTION DIRECTION

# FIG. 16

1003

STORAGE MEDIUM

VIDEO DATA

1001

PROCESSOR

VIDEO DATA

1002

PROGRAM MEMORY

BIT STREAM

1004

STORAGE MEDIUM

BIT STREAM

# FIG. 17

```
        11                                    12
   ┌─────────────────────┐          ┌─────────────────────────┐
   │  PREDICTION MEANS   │          │  INVERSE QUANTIZATION   │
   └─────────────────────┘          │  MEANS                  │
             │         14           └─────────────────────────┘
             ▼                                  │        13
   ┌─────────────────────┐                      ▼
   │ RECONSTRUCTION MEANS │◄──────── ┌─────────────────────────┐
   └─────────────────────┘          │  INVERSE FREQUENCY      │
             │         15           │  TRANSFORMATION MEANS   │
             ▼                      └─────────────────────────┘
   ┌─────────────────────┐
   │ RECONSTRUCTED IMAGE │                               16
   │ STORAGE MEANS       │          ┌─────────────────────────┐
   └─────────────────────┘          │  NOISE INJECTION MEANS  │
      17     │                 ◄──── └─────────────────────────┘
             ▼
   ┌─────────────────────┐
   │  WIENER FILTER MEANS │
   └─────────────────────┘
             │         18
             ▼
   ┌─────────────────────┐
   │  REFERENCE IMAGE    │
   │  STORAGE MEANS      │
   └─────────────────────┘
```

# FIG. 18

21

PREDICTION MEANS

20

ENTROPY DECODE MEANS

22

INVERSE QUANTIZATION MEANS

23

INVERSE FREQUENCY TRANSFORMATION MEANS

24

RECONSTRUCTION MEANS

25

RECONSTRUCTED IMAGE STORAGE MEANS

26

NOISE INJECTION MEANS

27

WIENER FILTER MEANS

28

REFERENCE IMAGE STORAGE MEANS

# FIG. 19

```
        S11                                    S12
  ┌──────────────────────┐          ┌──────────────────────┐
  │ CALCULATE PREDICTION │          │ OBTAIN QUANTIZATION  │
  │ SIGNAL               │          │ REPRESENTATIVE VALUE │
  └──────────────────────┘          └──────────────────────┘
                                                  │      S13
                                                  ▼
                                     ┌──────────────────────┐
                                     │ OBTAIN RECONSTRUCTED │
                                     │ PREDICTIVE ERROR IMAGE│
                                     │ BLOCK                │
                                     └──────────────────────┘
              S14
  ┌──────────────────────┐
  │ OBTAIN RECONSTRUCTED │
  │ IMAGE BLOCK          │
  └──────────────────────┘
              │      S15
              ▼
  ┌──────────────────────┐
  │ STORE RECONSTRUCTED  │
  │ IMAGE BLOCK          │
  └──────────────────────┘
              │      S16
              ▼
  ┌──────────────────────┐
  │ INJECT NOISE INTO    │
  │ RECONSTRUCTED IMAGE  │
  │ PICTURE              │
  └──────────────────────┘
              │      S17
              ▼
  ┌──────────────────────┐
  │ APPLY WIENER FILTER  │
  └──────────────────────┘
              │      S18
              ▼
  ┌──────────────────────┐
  │ STORE REFERENCE      │
  │ IMAGE PICTURE        │
  └──────────────────────┘
```

# FIG. 20

S21
**CALCULATE PREDICTION SIGNAL**

S20
**ENTROPY-DECODE BIT STRING TO CALCULATE QUANTIZATION INDEX**

S22
**OBTAIN QUANTIZATION REPRESENTATIVE VALUE**

S23
**OBTAIN RECONSTRUCTED PREDICTIVE ERROR IMAGE BLOCK**

S24
**OBTAIN RECONSTRUCTED IMAGE BLOCK**

S25
**STORE RECONSTRUCTED IMAGE BLOCK**

S26
**INJECT NOISE INTO RECONSTRUCTED IMAGE PICTURE**

S27
**APPLY WIENER FILTER**

S28
**STORE REFERENCE IMAGE PICTURE**

FIG. 21

BIT STREAM

104 ENTROPY ENCODER

101 MB BUFFER

FRAME

102 FREQUENCY TRANSFORMATION UNIT

103 QUANTIZATION UNIT

105 INVERSE QUANTIZATION UNIT

106 INVERSE FREQUENCY TRANSFORMATION UNIT

107 PICTURE BUFFER

108 DEBLOCKING FILTER UNIT

109 DECODE PICTURE BUFFER

110 INTRA PREDICTION UNIT

111 INTER-FRAME PREDICTION UNIT

112 CODER CONTROL UNIT

100

# FIG. 22

FRAME(QCIF)  MB  X=LUMINANCE POSITION
O=COLOR DIFFERENCE POSITION

## INTERNATIONAL SEARCH REPORT

International application No.

PCT/JP2010/006344

| A. CLASSIFICATION OF SUBJECT MATTER |
| --- |
| H04N7/32(2006.01)i |

According to International Patent Classification (IPC) or to both national classification and IPC

**B. FIELDS SEARCHED**

Minimum documentation searched (classification system followed by classification symbols)
H04N7/32

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2007-508788 A (Thomson Licensing),<br>05 April 2007 (05.04.2007),<br>paragraphs [0002], [0003], [0007], [0008]<br>& WO 2005/039188 A1    & US 2007/0058866 A1<br>& EP 1673943 A1    & CN 1868216 A<br>& KR 10-2006-0132813 A    & MXPA 06004097 A | 1-45 |
| A | JP 2002-204357 A (Nikon Corp.),<br>19 July 2002 (19.07.2002),<br>paragraphs [0029], [0045] to [0060], [0080];<br>fig. 2, 4<br>(Family: none) | 1-45 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>17 December, 2010 (17.12.10) | Date of mailing of the international search report<br>28 December, 2010 (28.12.10) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2010/006344 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2007-324923 A  (Sharp Corp.), 13 December 2007 (13.12.2007), paragraphs [0011], [0024], [0044] to [0052], [0055], [0056]; fig. 4, 9 to 12 (Family: none) | 1-45 |
| A | Steffen Wittmann and Thomas Wedi, Transmission of Post-Filter Hints for Video Coding schemes, IEEE International Conference on Image Processing, 2007. ICIP 2007, 2007.09.16, Vol.1, p.I-81 - I-84 | 1-45 |
| A | Toshiba Corp., Quadtree-based adaptive loop filter, ITU-T Question(s):6/16 STUDY GROUP 16 - CONTRIBUTION 181 COM16-C181-E, ITU-T, 2009.01 | 1-45 |
| A | Tsuhan Chen, Elimination of Subband-Coding Artifacts Using The Dithering Technique, IEEE International Conference on Image Processing, 1994. Proceedings. ICIP-94, 1994.11.13, Vol.2, p.874-877 | 1-45 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007503166 A
- JP 2007507169 A
- JP 2009272179 A

### Non-patent literature cited in the description

- **STEFFEN WITTMANN ; THOMAS WEDI.** Transmission of Post-Filter Hints For Video Coding Schemes. *ICIP2007, USA,* September 2007
- Quadtree-based adaptive loop filter. ITU-T, COM16C181. Toshiba corporation, January 2009
- **L.G. ROBERTS.** Picture coding using pseudorandom noise. *IRE Trans. on Information Theory,* February 1962, vol. IT-8, 145-154
- **T. CHEN.** Elimination of subband coding artifacts using the dithering technique. *ICIP94,* November 1994
- **CHONO et al.** A complexity Reduction Method for H. 264 Intra Prediction Estimator Using the Characteristics of Hadamard Transform. *IEICE Society papers,* 2005, D-11-52